# EUROPÄISCHE PATENTSCHRIFT

(11) **EP 2 384 257 B1**
(45) Veröffentlichungstag und Bekanntmachung des Hinweises auf die Patenterteilung: **19.06.2013**
(21) Anmeldenummer: 10701361.7
(22) Anmeldetag: 26.01.2010
(51) Int. Cl.: B23P 19/00, B65G 51/02

(54) **PNEUMATISCHE DRUCKLUFT-ROHRFÖRDERANLAGE**
PNEUMATIC COMPRESSED-AIR TUBE TRANSPORT SYSTEM
AGENCEMENT DE TRANSPORT TUBULAIRE PNEUMATIQUE À AIR COMPRIMÉ

(30) Priorität: 31.01.2009 DE 102009007012
(43) Veröffentlichungstag der Anmeldung: 09.11.2011
(73) Patentinhaber: Hettich Holding GmbH & Co. oHG, 32278 Kirchlengern (DE)
(72) Erfinder: STUKE, Kai Michael, 33699 Bielefeld (DE); BIERVERT, Klaus, 32139 Spenge (DE); SCHENDA, Frank, 32278 Kirchlengern (DE)
(74) Vertreter: Specht, Peter
(86) Internationale Anmeldenummer: PCT/EP2010/050844
(87) Internationale Veröffentlichungsnummer: WO 2010/086296

(56) Entgegenhaltungen:
- DE-A1- 10 332 655
- DE-A1- 19 908 048
- US-A- 4 076 321

## Beschreibung

Die Erfindung betrifft eine pneumatische Druckluft-Rohrförderanlage nach den Oberbegriffen der Ansprüche 1 und 2 und ein Verfahren zu deren Ansteuerung.

Eine Druckluft-Rohrförderanlage ist aus der US 5,217,328 bekannt. Die in dieser Schrift beschriebene Rohrförderanlage wird dazu genutzt, Kleinteile wie Schrauben, Bolzen oder dgl. durch ein Rohrsystem aus Vorratsbehältern zu Montagemaschinen zu transportieren. Die rechnergesteuerte Druckluft-Rohrförderanlage umfasst dazu das eigentliche Vorratsbehältnis zur Aufnahme verschiedener Kleinteile, eine dem Vorratsbehältnis nachgeschaltete Einlaufeinrichtung, ein der Einlaufeinrichtung nachgeschaltetes Rohrsystem mit Weichen und Abscheidern als Empfangsstationen, an denen die Kleinteile aus dem Rohrsystem ausgelassen und in lokale Vorratsbehältnisse an den Montagemaschinen geleitet werden. Die Rohrförderanlage stößt bei einem Einsatz an komplexeren Montagelinien bald an ihre anlagenspezifischen und/oder steuerungsbedingten Grenzen.

Aus der gattungsgemäßen DE 201 20 905 U1 ist eine Rohrverschiebeeinheit für pneumatische Teileförderanlagen bekannt, die eine Aufgabeseite und eine Verbraucherseite aufweist. Allerdings eignet sich diese Anlage nur für einfache Montageflächen, da räumlich sehr weit aufeinander liegende Montagezweige mit ihr nicht bedient werden können.

Die Behebung dieses Problems ist die Aufgabe der Erfindung.

Die Erfindung löst die Aufgabe in Hinsicht auf die Druckluft-Rohrförderanlage jeweils durch den Gegenstand der Ansprüche 1 und 2 und schafft ferner das in Anspruch 17 angegebene Verfahren zur Steuerung der Druckluft-Rohrförderanlage.

Derart kann auch an sehr komplexen Montagelinien die Kleinteileversorgung der einzelnen Montagestationen mit Hilfe einer pneumatischen Druckluft-Rohrförderanlage organisiert werden. Die bisher gegebenen anlagenspezifischen Grenzen werden insbesondere durch die mehreren parallelen Aufgabezweige mit eigenen Luftförderern ohne weiteres überwunden. Ein wesentlicher Vorteil der beschriebenen Anlage ist die Möglichkeit, nacheinander über die gleiche Verteilungsanlage auch sich in Geometrie und / oder Material - insbesondere Metall und Kunststoff - unterscheidende Teile zu fördern, wobei die Förderung eines bestimmten Teiletyps jeweils kontinuierlich in beliebigen Mengen erfolgen kann und nicht auf bestimmte Batchvolumina beschränkt ist.

Die Steuerungsvorrichtung ist vorzugsweise mit einem Steuerungsprogramm zur Steuerung der Druckluft-Rohrförderanlage versehen.

Mit diesem Programm ist die Rohrförderanlage derart ansteuerbar, dass stets nur einer der Bunker aller Aufgabezweige mit stets nur einem der Endabscheider verbindbar ist, so dass sich stets nur eine Sorte von Kleinteilen im mit Druckluft beaufschlagbaren (Rohrleitungs-)Bereich der Rohrförderanlage befindet.

Vorzugsweise ist die Zeitdauer des Luftstrombeaufschlagens der Druckluft-Rohrförderanlage zum Transport jeweils eines bestimmten Kleinteils derart bemessen, dass sich keine Kleinteile mehr im mit Druckluft beaufschlagbaren Rohrleitungsbereich der Druckluft-Rohrförderanlage befinden, bevor eine andere Verbindung zwischen einem anderen Bunker und einer anderen Abgabestation aktiviert wird.

Besonders vorteilhaft ist es, wenn die Zeitdauer des Luftstrombeaufschlagens der Druckluft-Rohrförderanlage zum Transport jeweils eines bestimmten Kleinteils länger ist als die sich aus der Entfernung und der Kleinteilgeschwindigkeit im Luftstrom errechnende Transportzeit zum jeweiligen Abscheider. Derart wird sichergestellt, dass das gesamte Rohrleitungssystem stets vollständig entleert ist, bevor ein neues Kleinteil in das Rohrsystem eingelassen wird.
Es ist zweckmäßig, wenn die Stärke des Luftstromes der Luftstromerzeuger jeweils entsprechend zum Gewicht (und ggf. in Abhängigkeit von deren Form) der zu fördernden Teile gesteuert wird.

Vorteilhafte Ausgestaltungen der Erfindung sind den übrigen Unteransprüchen zu entnehmen.

In Hinsicht auf den Stand der Technik zu Druckluft-Rohrförderanlagen werden noch die DE 10 2005 049 597, die DE 201 20 905 U1 und die DE 299 01 213 U1 genannt.

Nachfolgend wird die Erfindung anhand eines bevorzugten Ausführungsbeispiels unter Bezug auf die Zeichnung näher beschrieben. Es zeigt:
- Fig. 1: eine schematische Darstellung eines Teilbereichs einer pneumatischen Druckluft-Rohrförderanlage in einer x-y-Ebene,
- Fig. 2: eine Draufsicht auf einen Teil des Teilbereichs der Druckluft-Rohrförderanlage aus Fig. 1 in einer x-z-Ebene entsprechend dem Sichtpfeil II in Fig. 1 in vergrößertem Maßstab,
- Fig. 3: eine schematische Ansicht einer gesamten Druckluft-Rohrförderanlage in der x-z-Ebene, wobei verschiedene Schaltzustände der einzelnen Baugruppen anhand pneumatischer Sinnbilder gezeigt sind,
- Fig. 4: einen Bunker zur Aufnahme von Fördergut in einer Seitenansicht entsprechend der z-y-Ebene,
- Fig. 5: eine Schnittansicht auf einen Teil des Bunkers entsprechend dem Schnittverlauf V-V in Fig. 4, wobei hier eine elektromotorische Fördereinrichtung mit einer pneumatisch verschwenkbaren Klappe gezeigt ist,
- Fig. 6: eine Vorderansicht des Bunkers entsprechend der Ansicht in Richtung des Pfeils VI in Fig. 4,
- Fig. 7: eine vergrößerte Ansicht auf den pneumatischen Antrieb der Klappe, wobei diese hier in geschlossener und gestrichelt in offener Endstellung gezeigt ist,
- Fig. 8: eine Vorderansicht eines Trichters in der x-y-Ebene, dabei wurde auf die vollständige Darstellung des rechten Teils verzichtet, da der Trichter zu einer Vertikalen symmetrisch gestaltetet ist,
- Fig. 9: eine schematische Ansicht auf den Trichter entsprechend der Richtung des Pfeils IX in Fig. 8,
- Fig. 10: eine Teilansicht auf den Trichter entsprechend der Richtung des Pfeils X in Fig. 8,
- Fig. 11: eine vergrößerte Ansicht eines Förderrohr-Teiles mit einer Absperrklappe und einem pneumatischen Antrieb,
- Fig. 12: eine Seitenansicht der Absperrklappe entsprechend der Ansicht in Richtung des Pfeils XII in Fig. 11,
- Fig. 13: eine vergrößerte Ansicht in vertikaler Lage des pneumatischen Antriebs in Form eines doppeltwirkenden Pneumatikzylinders einschließlich eines 4-2-Wegeventils,
- Fig. 14: eine vergrößerte Ansicht mit teilweise aufgebrochenem Bereich des Förderrohres entsprechend einer Einzelheit der Fig. 1 als Ausführung jeweils aneinander stoßender Förderrohr-Teile, wobei die Strömungsrichtung von links nach rechts verläuft
- Fig. 15: eine Vorderansicht von zwei aufeinander gesetzten Bunker-Erweiterungen in der x-y-Ebene,
- Fig. 16: eine vergrößerte Ansicht einer Rollenlagerung eines Schiebers (Einzelheit Y in Fig. 15),
- Fig. 17: eine Seitenansicht einer der Bunker-Erweiterungen in der x-y-Ebene in verkleinertem Maßstab,
- Fig. 18: eine Draufsicht in vergrößertem Maßstab eines unteren Bereichs der Bunker-Erweiterung entsprechend der Ansicht des Pfeils XVIII in Fig. 15,
- Fig. 19: eine Draufsicht auf den Bunker in einer um 90 Grad gedrehten Teil-Ansicht entsprechend der Richtung des Pfeils XIX in Fig. 16,
- Fig. 20: eine Draufsicht auf eine Einlaufeinrichtung in der x-z-Ebene in vergrößertem Maßstab,
- Fig. 21: eine Ansicht des Einlaufsystems entsprechend dem Schnittverlauf XXI-XXI in Fig. 20 mit einem Teil einer Seitenplatte,
- Fig. 22: eine vergrößerte Schnitt- Ansicht einer Einzelheit W in Fig. 21,
- Fig. 23: eine Schnitt-Ansicht des Einlaufsystems entsprechend dem Schnittverlauf XXIII-XXIII in Fig. 20, wobei hier das Leitblech und der dadurch eingeengte Förder-Luftstrom durch dünne Linien angedeutet sind,
- Fig. 24: eine Ansicht auf einen Teil des Einlaufsystems entsprechend der Richtung des Pfeils XXIV in Fig. 20, wobei hier die Befestigung eines Rohrstutzens mit einer diesen umspannenden Flansch-Klemmeinrichtung dargestellt ist,
- Fig. 25: eine Draufsicht in der x-z-Ebene auf eine 4-3-Wege-Weiche zur wählbaren Herstellung einer Verbindung von einem der drei zulaufenden Rohrstutzen zu einem abgehenden Rohrstutzen, wobei die Verbindungsrohre gemeinsam als eine Verbindungsrohr-Einheit an einem Schlitten angeordnet sind und wobei hier eine erste Schaltstellung dargestellt ist,
- Fig. 26: die Verbindungsrohr-Einheit relativ zum Gehäuse in einer zweiten Schaltstellung,
- Fig. 27: die Verbindungsrohr-Einheit relativ zum Gehäuse in einer dritten Schaltstellung,
- Fig. 28: eine die Verbindungsrohr-Einheit tragende Führungs- und Antriebseinheit,
- Fig. 29: eine Ansicht der Führungs- und Antriebseinheit in Richtung des Pfeils XXIX in Fig. 28,
- Fig. 30: eine Ansicht in das Innere eines Abscheiders in der x-y-Ebene mit einer gestrichelt gezeichneten Führungs- und Antriebseinheit,
- Fig. 31: eine Ansicht auf den Abscheider entsprechend der Richtung des Pfeils XXXI in Fig. 30,
- Fig. 32: eine Ansicht eines 3-2-Wege-Verteilers, wobei eine Schaltstellung des im Innern befindlichen Leitblechs und eine andere Schaltstellung durch einen Teil des Leitblechs an einem aufgebrochenen Gehäuseteil ersichtlich ist,
- Fig. 33: eine Draufsicht auf den 3-2-Wege-Verteiler in Richtung des Pfeils XXXIII in Fig. 32,
- Fig. 34: eine Ansicht einer Fall-Drehrohrweiche in der x-y-Ebene,
- Fig. 35: eine Ansicht der Fall-Drehrohrweiche in Richtung des Pfeils XXXV in Fig. 34,
- Fig. 36: eine schematische Darstellung der Fall-Drehrohrweiche gemäß Fig. 34,
- Fig. 37: eine schematische Ansicht der Fall-Drehrohrweiche gemäß dem Schnittverlauf XXXVII-XXXVII in Fig. 36,
- Fig. 38: eine Ansicht eines Endabscheiders in der x-y-Ebene und
- Fig. 39: eine Ansicht des Endabscheiders in Richtung des Pfeils XXXIX in Fig. 39.

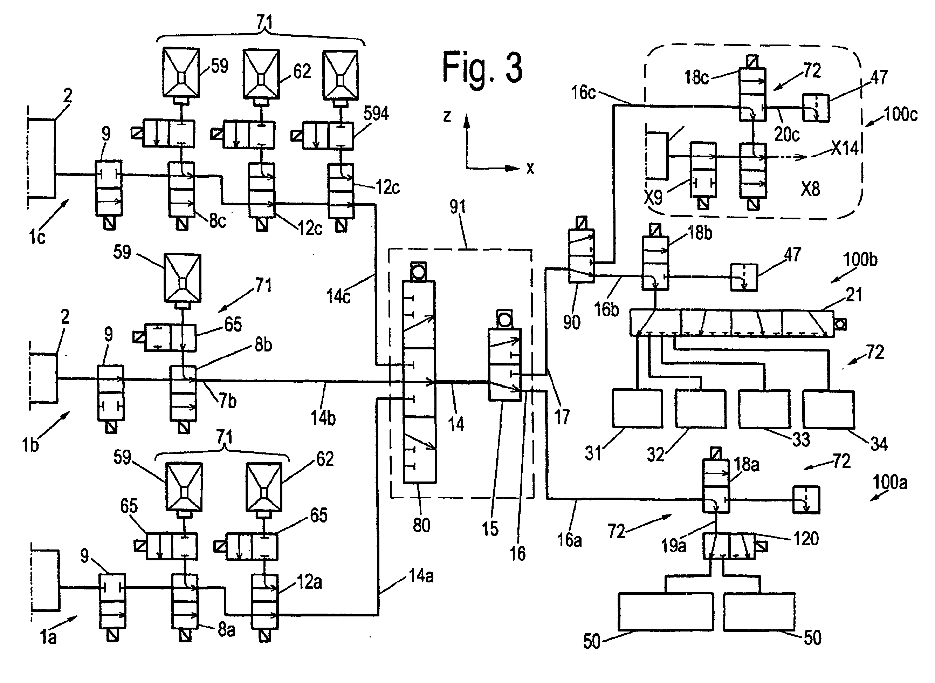

Fig. 3 zeigt eine Druckluft-Rührförderanlage in der x-z-Ebene, die wenigstens zwei oder mehr - hier drei - Aufgabezweige 1a, 1b, 1c aufweist, die jeweils zumindest einen Luftstromerzeuger 2, eine dem jeweiligen Luftstromerzeuger 2 nachgeschaltete Absperreinrichtung, insbesondere eine Absperrklappe 9 und eine der Absperrklappe 9 nachgeschaltete Aufgabestation 71 für Kleinteile aufweisen und die über Rohre 14a, b, 14c in eine Vereinigungsweiche 80 münden.

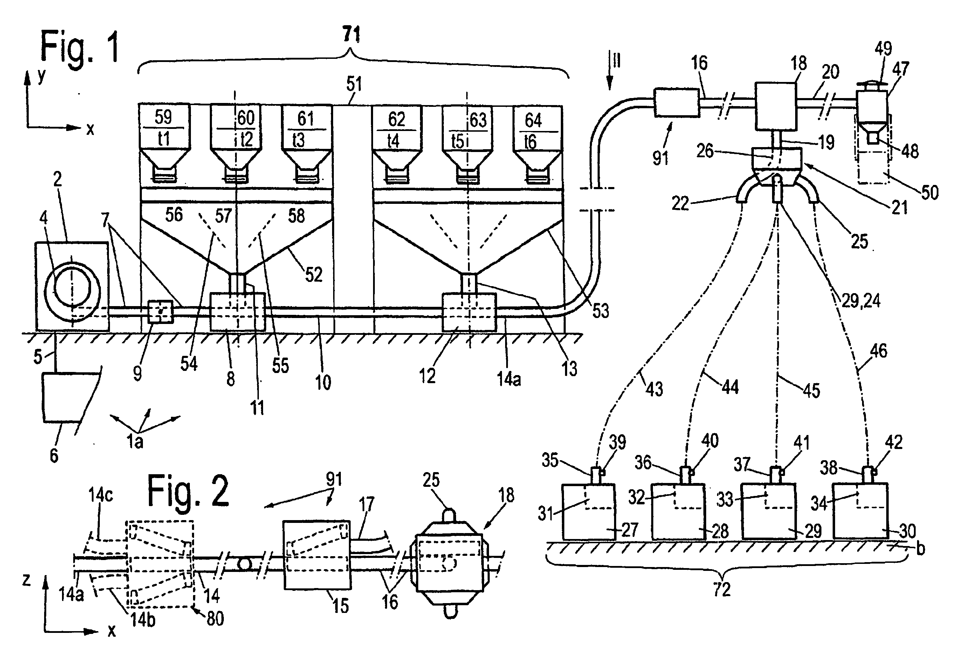

Die in x-Richtung bis zu dem Rohr 14 angeordneten Bauteile - bis auf den Drucklufterzeuger 2 und die Absperrklappe 9 - bilden hier jeweils eine Aufgabestation 71, und die Einrichtungen 27 bis 30 bilden eine Abgabestation 72 (Fig. 1).

Wie in Fig. 3 angedeutet, sind eine Reihe von Komponenten der Druckluft-Rohrförderanlage - vorzugsweise elektrisch oder optisch - ansteuerbar ausgelegt. Diese Komponenten sind drahtlos oder über Leitungen 5 (wie in Fig. 1 am Beispiel des Luftstromerzeugers 2 angedeutet) mit einer in Fig. 1 angedeuteten Steuerungsvorrichtung 6 verbunden, die zur Ansteuerung der Komponenten dient.

Zunächst sei nachfolgend unter Bezug auf Fig. 1 beispielhaft einer der Aufgabezweige - der Aufgabezweig 1a - näher beschrieben:

Der in Fig. 1 dargestellte Aufgabezweig 1a der Druckluft-Rohrförderanlage 1 weist einen eigenen Luftstromerzeuger 2 zur Erzeugung von Druckluft zum Transport von Kleinteilen auf. Dieser ist beispielsweise als Kreiselgebläse 3 ausgebildet, das zu seinem Antrieb mit einem Elektromotor 4 versehen sein kann.

Der Elektromotor 4 ist über eine elektrische Leitung 5 mit der Steuerungsvorrichtung 6 verbunden.

An den Luftstromerzeuger 2 ist ein (vorzugsweise etwa horizontal/waagerecht verlaufendes) Rohr 7 angeschlossen, das in eine erste Einlaufeinrichtung 8 mündet, wobei das Rohr 7 zwischen dem Kreiselgebläse 3 und der Einlaufeinrichtung 8 mit der bereits erwähnten Absperrklappe 9 versehen ist.

Die Absperrklappe 9 ermöglicht ein schnelles Ein- und Ausschalten des Luftstromes innerhalb des Rohrsystems, sodass dieses z.B. beim Umschalten von Rohrleitungsweichen druck- bzw. stromlos geschaltet werden kann. Das Hoch- und Herunterfahren des Luftstromerzeugers ist hingegen sehr viel zeitaufwändiger.

Die Einlaufeinrichtung 8 ist derart ausgebildet, dass
- in einer ersten Schaltstellung entweder eine Verbindung des Rohres 7 mit einem sich anschließenden Rohr 10 und eine Verbindung zu einem sich rechtwinklig nach oben erstreckenden Einlaufrohr 11 hergestellt ist, wobei das Rohr 7 vor der Einmündung des Einlaufrohres 11 eine Querschnittsverengung aufweist, oder
- in einer zweiten Schaltstellung eine Verbindung des Rohres 7 mit dem Rohr 10 mit vollem Querschnitt hergestellt und die Verbindung zu dem Einlaufrohr 11 abgesperrt ist.

Zur Einstellung der ersten oder zweiten Schaltstellung sind pneumatische Stellantriebe vorgesehen, die mit der Steuerungsvorrichtung 6 verbunden und mit dieser ansteuerbar sind.

Das Rohr 10 erstreckt sich in Fig. 1 bis zu einer weiteren Einlaufeinrichtung 12, welche analog zur Einlaufeinrichtung 8 ausgebildet und in entsprechende Schaltzustände bringbar ist. Die Einlaufeinrichtung 12 ist mit einem sich senkrecht nach oben erstreckenden Einlaufrohr 13 und einem waagerecht verlaufenden Rohr 14a verbunden.

Nach Fig. 3 weist der erste Aufgabezweig 1 a zwei dem Luftstromerzeuger 2 nachgeschaltete Einlaufeinrichtungen 8a und 12a auf. Diese Anzahl an Einlaufeinrichtungen ist rein beispielhaft zu verstehen. So ist es in Fig. 3 dargestellt, dass der zweite Aufgabezweig 1b z.B. nur eine Einlaufeinrichtung 8b und der dritte Einlaufzweig 1c z.B. drei Einlaufeinrichtungen 8c, 12c, 12cc aufweisen kann. Prinzipiell können auch mehr Einlaufeinrichtungen in einem Zweig hintereinander angeordnet sein, z.B. fünf oder noch mehr.

Der Luftstromerzeuger 2 und die Einlaufeinrichtungen 8, 12 befinden sich vorzugsweise in fester Anordnung auf einem Boden a einer Fabrikhalle, wobei die Rohre 7, 10 und ein Teil von Rohr 14 durch Befestigungsteile (nicht dargestellt) ebenso am Boden a befestigt sein können.

Durch die parallele Anordnung der mehreren Aufgabezweige 1a, 1b, 1c, die in wenigstens eine Vereinigungsweiche 80 münden, kann die Komplexität der Druckluft-Rohrförderanlage mit einfachen Mitteln erheblich gesteigert werden und ermöglicht, eine Vielzahl unterschiedlicher Kleinteile zu fördern.

Das vorgenannte Rohr 14a weist in Fig. 1 beispielhaft zwei nicht näher bezeichnete 90-Grad-Rohrbögen auf und endet in waagerechtem Verlauf an einer Weichenvorrichtung 91, die vorzugsweise auf ihrer einlaufenden Seite wenigstens eine Vereinigungsweiche 80 aufweist und auf ihrer auslaufenden Seite wenigstens eine Verzweigungsweiche 15 (Fig. 2). Das zwischen den beiden Weichen 80 und 15 angeordnete Rohr 14 ist zu Gunsten einer guten Übersichtlichkeit in Fig. 2 und 3 nur sehr kurz dargestellt, in der realen Anlage dagegen überbrückt es die oftmals große Distanz zwischen der Teilebevorratung im Lager oder Wareneingang und der Teilebedarfsstelle in z.B. einer Montagehalle.

In die Vereinigungsweiche 80 münden die Aufgabezweige, also bei dem in Fig. 3 dargestellten Ausführungsbeispiel die drei Aufgabezweige 14a, 14b und 14c.

Da in der Regel nicht nur eine Montagestation, sondern eine Vielzahl an Montagestationen mit Kleinteilen zu versorgen ist, wird dem der Vereinigungsweiche 80 folgenden Rohr 14 vorzugsweise wenigstens eine Verzweigungsweiche 15, evtl. eine weitere Verzweigungsweiche 90 nachgeschaltet, um die Kleinteile zunächst in verschiedene Versorgungsstränge, z.B. die Abgabezweige 100a, 100b oder 100c zu verzweigen, durch die die Kleinteile zu verschiedenen Abgabestationen 72 an verschiedenen Montagestationen gefördert werden können.

Die beispielhaft als 3-2-Wegesystem ausgeführte Verzweigungsweiche 15 ist vorzugsweise mit einem pneumatischen Stellantrieb in zwei Schaltstellungen bringbar, so dass entweder eine durchlaufende Verbindung des Rohres 14 mit einem koaxial dazu verlaufenden Rohr 16 oder eine Verbindung des Rohres 14 mit wenigstens einem abzweigenden Rohr 17 herstellbar ist (Fig. 2 und Fig. 3).

Gemäß Fig. 2 bildet die Weiche 15 mit dem Rohr 17 eine Verzweigungsweiche, wobei das Rohr 17 einen weiteren Förderstrang bildet, der wie das Rohr 16 an entsprechenden Bauteilen wie dem Abscheider 18 mit dem Fallrohr 19, dem Verteiler 21 mit den angeschlossenen Einrichtungen 27 bis 30 und dem Endabscheider 47 endet.

Gemäß Fig. 2 erstreckt sich die Druckluft-Rohrförderanlage 1 mit der durch die Weiche 15 erreichten Verzweigung der Rohre 16, 17 vorteilhafterweise in z-Richtung, aber auch andere Anordungen sind abhängig von räumlichen Gegebenheiten möglich.

In jedes der abzweigenden Rohre 16, 17 kann wiederum wenigstens eine weitere Verzweigungsweiche 90 geschaltet sein.

Wie in Fig. 3 dargestellt, ist aber auch eine Ausgestaltung mit mehreren Weichen der Bauform der Weiche 15 möglich.

Nach dem in Fig. 3 dargestellten Ausführungsbeispiel sind drei Ausgabezweige 100a, 100b, 100c vorgesehen, die wiederum je für sich auf verschiedene Weise ausgestaltet sein können und die jeweils wenigstens eine oder mehrere Abgabestationen 72 aufweisen.

Nach Fig. 3 weisen beispielhaft die Abgabezweige 100a und 100b nur jeweils eine der Abgabestationen 72 auf. Die Abgabestationen können dabei wiederum je für sich verschieden gestaltet sein.

Zunächst endet jedes Rohr 16a, b der zwei Abgabestationen 72 a, b jeweils in einem ansteuerbaren Abscheider 18a, b, der mit einer pneumatischen Stelleinrichtung derart einstellbar ist, dass
- in einer ersten Schaltstellung eine Verbindung des Rohres 16 mit einem sich senkrecht erstreckenden Fallrohr 19 oder
- in einer zweiten Schaltstellung eine Verbindung des Rohres 16 mit einem dazu koaxial angeordneten Rohr 20 herstellbar ist.

Das Rohr 20 führt in den jeweils dargestellten Beispielen zu einem Endabscheider 47, wobei sich alternativ aber auch noch weitere Abscheider 18 oder auch weitere Weichen anschließen können (hier nicht dargestellt).

Die Abscheider 18 können entweder direkt zu einem Sammelbehälter an der jeweiligen Montageeinrichtung (hier nicht dargestellt) führen oder sie können über jeweils eine ein - oder mehrstufige Verzweigungsweiche in verschiedene Sammelbehälter 50 münden.

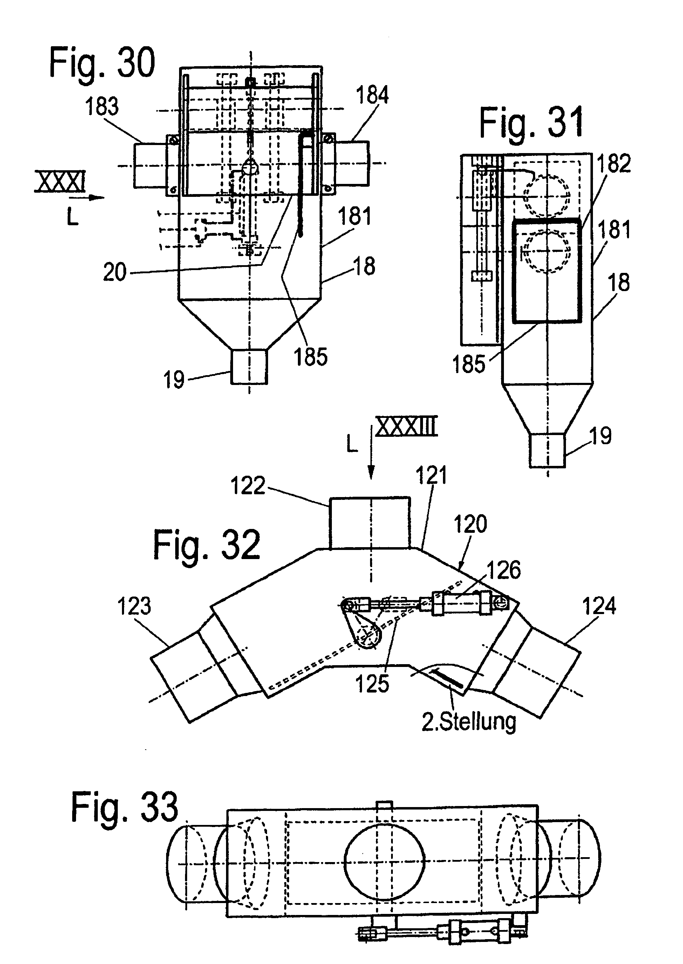

Bei dem Abgabezweig 100a mündet der Abscheider 18a in seiner (dargestellten) einen Schaltstellung durch das Fallrohr 19a in einem darunter befindlichen 3-2-Wege-Fallrohrverteiler 120, (vgl. Fig. 32, 33), der den Teilestrom durch die Steuerung anwählbar auf die Behälter 50-1 bzw. 50-2 verteilt.

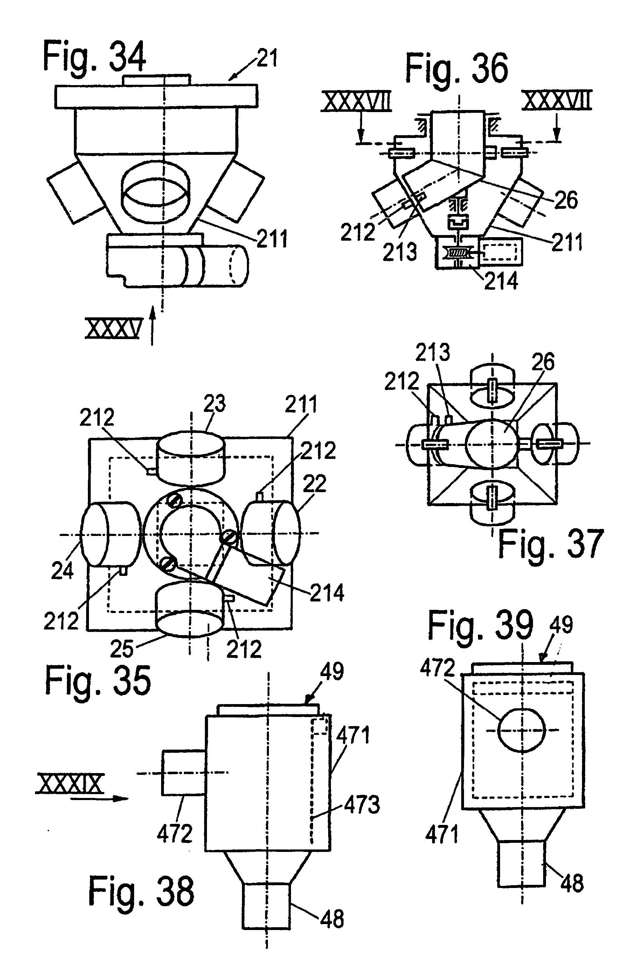

Nachfolgend sei der Abgabezweig 100b beschrieben (Fig. 1, 3):
Im Abgabezweig 100b mündet der Abscheider 18b in einer (dargestellten) ersten Schaltstellung durch das Fallrohr 19b in einem darunter angeordneten 5-4-Wege-Drehrohrverteiler 21, der an seinem ortsfesten Gehäuse 211 (Fig. 34 ff.) vier jeweils um 90 Grad versetzte Bögen 22, 23, 24, 25 aufweist. Diese sind jeweils mit einem nach unten gerichteten freien Ende (nicht bezeichnet) ausgebildet. Im Innern des Verteilers 21 befindet sich ein drehbar gelagertes Zuführrohr 26, welches von einem Elektroantrieb 214 umlaufend antreibbar und derart positionierbar ist, dass vier Schaltstellungen erreichbar sind, in denen jeweils einer der Bögen 22 bis 25 mit dem Fallrohr 19 verbindbar ist.

Gemäß Fig. 1 befinden sich unterhalb des Verteilers 21 vier Einrichtungen 27, 28, 29, 30 mit Vorratsbehältern 31, 32, 33, 34, die jeweils rohrförmige Einfüllstutzen 35, 36, 37, 38 aufweisen. Die Einrichtungen 27 bis 30 sind als weiterverarbeitende Maschinen wie Montage-Maschinen, Verpackungs-Maschinen oder sonstige Be- oder VerarbeitungsMaschinen ausgebildet. An jedem der Einfüllstutzen 35, 36, 37, 38 ist mindestens ein Sensor 39, 40, 41, 42 zur Erfassung des Füllstandes angeordnet, alternativ können z.B. jeweils auch mindestens zwei Sensoren zur Erfassung eines minimalen und maximalen Füllstandes angeordnet sein. Die Bögen 22 bis 25 können mit den Einfüllstutzen 35 bis 38 durch flexible Schläuche 43, 44, 45, 46 verbunden sein.

Vorteilhafterweise verläuft der sich in y-Richtung (Fig. 1) nach oben hin erstreckende Teil des Rohres 14 mit seinem waagerechten Abschnitt sowie den sich daran anschließenden Bauteilen im oberen Teil, also nahe der Decke der Fabrikhalle, während die Einrichtungen 27 bis 30 auf einem Boden b angeordnet sind. Besonders vorteilhaft ist es, wenn sich der Verteiler 21 einige Meter, beispielsweise 4 Meter oberhalb der beieinander angeordneten Einrichtungen 27 bis 30 befindet, so dass genügend kinetische Energie zur Zuleitung in die entsprechenden Vorratsbehälter vorhanden ist.

Es ist als weitere Ausgestaltung und zur Erweiterung der Anlage denkbar, dass die Abscheider 18 nach Art des Abgabezweiges 100c zunächst in ein Rohr münden, dem wiederum ein Luftstromerzeuger X2 mit einer nachgeschalteten Absperrklappe X9 zugeordnet ist, was von Vorteil sein kann, wenn die Kleinteile über relativ große Distanzen zu fördern sind. Der Abgabezweig 100c weist damit einen Abscheider 18c auf, dem als Luftneueinspeiser bzw. Booster ein Einlauf X8 und eine Luftstromerzeugungseinrichtung X2 mit einer Absperrklappe X9 nachgeschaltet ist.

Die Erstreckung der Druckluft-Rohrförderanlage 1 in x-Richtung, das heißt die Entfernung von der Aufgabestation 71 bis zu dem Endabscheider 47, beziehungsweise dem am weitesten entfernt befindlichen Endabscheider 47 kann beispielsweise bis zu 100 Meter betragen.

Durch Einsatz von Booster-Anordnungen nach Art der Fig. 3 (Abgabezweig 100c) kann die Reichweite beliebig verlängert werden. Dazu ist der Abgabezweig 100c in besonderer Weise konfiguriert: Er dient nicht zur unmittelbaren Zuführung von Teilen zu einer Abgabestation, sondern dazu, die dort durchlaufenden Teile auf eine weitere Wegstrecke zu senden. Die in dem Abscheider 18c ankommenden Teile werden direkt in einen stationären Einlauf X8 geleitet, der prinzipiell ähnlich wie die an anderer Stelle beschriebenen Einläufe 8, 12 funktioniert. Ähnlich wie bei den Aufgabezweigen 1a, b, c beschrieben fördert ein Gebläse X2 die in den Einlauf X8 fallenden Teile in ein Rohr X14, an das sich ein Fördersystem wie das beschriebene anschließen kann. Mit diesem Konzept ist die Förderreichweitenbegrenzung einer so gearteten Anlage aufgehoben, sodass auch große Distanzen überbrückt werden können.
Prinzipiell wären große Distanzen auch mit starken Luftfördereinrichtungen zu überbrücken, jedoch würden die in den Rohren auftretenden Strömungsverluste überproportional anwachsen und weiterhin würde der Aufwand für die Regelung der Luftfördermenge steigen, verbunden mit zusätzlichen Hoch- und Herunterlaufzeiten.

Auch eine gemischte Anordnung ist möglich, bei der eine 3-2-Wege-Verzweigung entweder in eine Abgabestation 72 oder aber in eine Booster-Anordnung wie zuvor beschrieben verzweigt.

Je nach Anlagenauslegung kann die Boosteranordnung auch ohne Absperrklappe X9 und / oder auch ohne die Möglichkeit, den Teilestrom im Abscheider zu einem Endabscheider weiterzuleiten, ausgeführt werden. Dann sind recht einfache Ausführungen denkbar, bei denen Gebläse, Abscheider und Einlauf als eine Baugruppe angeordnet und / oder ausgeführt werden können.

Die alternative Schaltstellung der Abscheiders 18a, b, c leitet den Luftstrom durch das Rohr 20 a, b, c zum Endabscheider 47a, b, c. Diese Schaltstellung dient üblicherweise nicht zum Teiletransport, sondern zum "Freiblasen" der Rohrleitung:
Üblicherweise wird der Luftstrom nach erfolgtem Abschluss des eigentlichen Teiletransports noch einen Zeitraum aufrecht erhalten, obwohl im Aufgabezweig keine Teile mehr in den Einlauf gefördert werden, um auch den Transport des letzten Teils zum Bestimmungsort sicher zu stellen.
Um nach Umschalten auf einen anderen Transportweg oder auf eine andere Teileart sicherzustellen, dass sich keine falschen Teile mehr im Rohr befinden, kann das Rohr in einem vor den eigentlichen neuen Transportzyklus (d.h. vor Beginn der Teileförderung in den Einlauf) vorgeschalteten Zyklus mit einem Luftstrom beaufschlagt werden, wobei aber der (oder ggf. alle hintereinander geschalteten) Abscheider 18 diesen durch das Rohr 20 zum jeweiligen Endabscheider 47 leitet, der eine Verbindung des Rohres 20 zu einem nach unten weisenden Rohrstutzen 48 und eine nach oben gerichtete Austrittsöffnung 49 aufweist. Unter dem Rohrstutzen 48 befindet sich ein an dem Endabscheider 47 aufgehängter Sammelbehälter 50, in dem fehlgeleitete Teile gesammelt werden können (Fig. 38 f.). Diese werden von dem Luftstrom in das Gehäuse 471 des Abscheiders 47 gefördert und prallen gegen die Prallplatte 473. Die Förderluft entweicht nach oben durch die Austrittsöffnung 49, während die Teile durch den Rohrstutzen 48 in den Behälter 50 fallen.

In Fig. 1 befnden sich die Einrichtungen 27, 28, 29 und 30 auf einem Boden b der Fabrikhalle. Besonders bei einem Tagesdurchsatz größerer Fördergut-Mengen mit einem Gewicht von etlichen Tonnen ist es vorteilhaft, wenn sich die Böden a und b im Wesentlichen in der gleichen Ebene erstrecken. Andererseits können sich die Böden a, b aber auch auf unterschiedlichen Ebenen befinden, wie das beispielsweise der Fall ist, wenn sich die Druckluft-Rohrförderanlage 1 über verschiedene Etagen eines Fabrikgebäudes erstreckt.

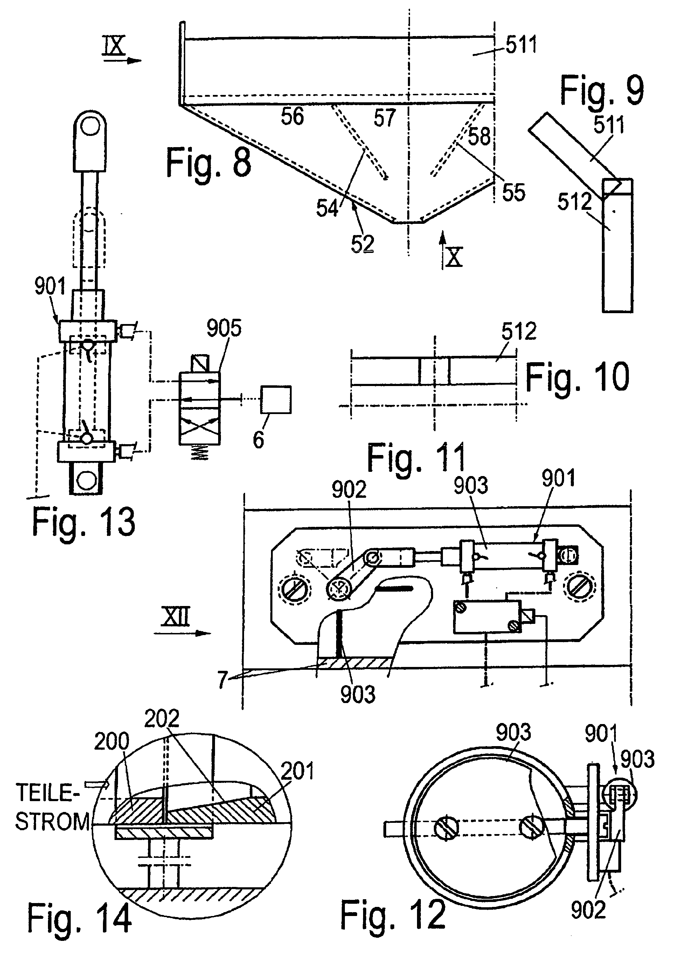

Auf dem Boden a stützt sich im Bereich der Aufgabestation 71 ein aus Winkelstahl gefertigtes Gestell 51 ab, an dem nebeneinander angeordnete und identisch ausgebildete Trichter 52 und 53 befestigt sind. Diese können vorteilhaft aus Stahlblech gefertigt und als Hohlkörper ausgebildet sein, in denen jeweils zwei Leitbleche 54 und 55 angeordnet sind. So werden z.B. an dem Trichter 52 drei Öffnungen 56, 57, 58 gebildet (Fig. 8, analog bei den übrigen Trichtern der Anlage). Oberhalb dieser Öffnungen befinden sich an dem Gestell 51 befestigte Bunker 59, 60, 61, die ebenso aus Stahlblech gefertigt und kastenförmig mit einem unteren, trichterförmigen Teil ausgebildet sein können. In gleicher Bauweise und Anordnung sind oberhalb des Trichters 53 entsprechend dem Bunker 59 ausgebildete Bunker 62, 63, 64 angeordnet und an dem Gestell 51 befestigt.

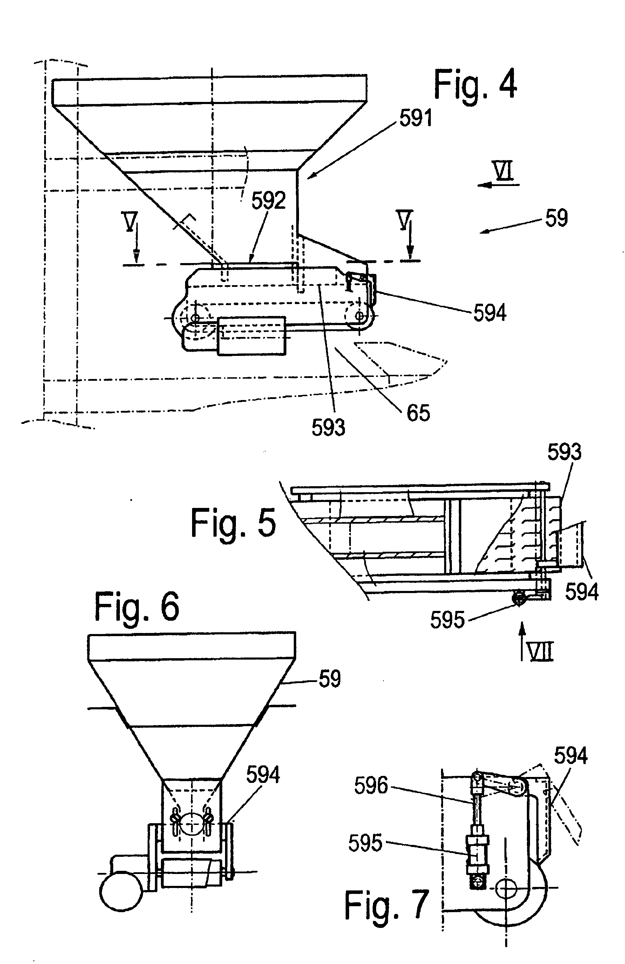

Die Bunker 59 bis 64 sind identisch ausgebildet, so dass sich die folgende Beschreibung auf den Bunker 59 beschränken kann (Fig. 4 ff.). Dieser weist an dem unteren, der Öffnungen der Einlauftrichter 52 zugewandten Rand ein Fenster auf, unter dem sich in einem Abstand von z.B. der zwei- bis fünffachen Teilgröße des Fördergutes (abhängig von Abmessungen und Stapelneigung der zu fördernden Teile) die Oberseite eines elektrisch antreibbaren Förderbandes 593 befindet, welches im Zusammenspiel mit einer Klappe 594 als Dosierförderer 65 bezeichnet wird.

Den Bunkern 60, 61, 62, 63 und 64 sind entsprechende Dosierförderer 65 zugeordnet.

Gemäß Fig. 1 sind die Bunker 59 bis 64 mit verschiedenen Bauteilen t1 bis t6, gefüllt, die ein Schüttgut bilden können und beispielsweise aus Metall, Plastik, Holz oder sonstigen Werkstoffen gefertigte Kleinteile, beispielsweise Bolzen, Nieten, Schrauben, Zapfen, Stifte oder auch kleinere Gehäuseteile sind.

Zu den Abmessungen der Kleinteile wird angegeben, dass diese nach einer besonders bevorzugten Ausgestaltung in ihrer maximalen Größe von einer gedachten Kugel mit einem Durchmesser von etwa 3 bis 5 Zentimeter umspannt werden können und ferner vorzugsweise ein Gewicht von bis zu 20 Gramm aufweisen.

Weiter wird angeben, dass die genannten Rohre und Schläuche vorzugsweise einen Innendurchmesser aufweisen, der etwa dem Drei- bis Vierfachen der gedachten Kugel, also etwa 10 bis 20 Zentimeter betragen.

Nachfolgend seien unter Bezug auf die Fig. 4 ff bevorzugte - aber nicht zwingende - Ausführungsformen der zuvor genannten Komponenten der Druckluft-Rohrförderanlage anhand detaillierterer Darstellungen näher beschreiben.

Fig. 4 bis 6 zeigen in ihrem Zusammenspiel eine detailliertere Darstellung einer bevorzugten Ausgestaltung eines der Bunker 59 zur Aufnahme von Fördergut in der Seitenansicht entsprechend der z-y-Ebene (Fig. 4) und in der Schnittansicht V - V auf einen Teil des Bunkers 59 (Fig. 5).

Die Bunker 59 weisen vorzugsweise einen unteren, trichterförmigen Teil 591 auf. Jeder Bunker 59 weist an dem unteren, dem Trichter 52 (Fig. 1) zugewandten Rand ein Fenster 592 auf, unter dem sich in einem Abstand von einigen Zentimetern - vorzugsweise wird als Abstand etwa die zwei- bis fünffache Teilgröße des Fördergutes gewählt - die Oberseite des bereits erwähnten elektrisch antreibbaren Förderbandes 593 befindet, dem eine vorzugsweise pneumatisch verschwenkbare Klappe 594 zugeordnet ist.

Das Förderband 593 und die Klappe 594 bilden jeweils die bevorzugten Dosierförderer 65 der Bunker 59 bis 64 aus.

Ist die Klappe 594 geöffnet und wird das Förderband 593 angetrieben, fallen die Kleinteile über den freien Rand des Förderbandes nach unten in den in den Einlauftrichter 52, 53.

Der Klappe kann als Stellantrieb ein pneumatisch betätigbarer Stellzylinder 595 zugeordnet sein, der über die Steuerungsvorrichtung 6 ansteuerbar ist und dessen Kolbenstange 596 mit einem Ende der drehbar gelagerten Klappe 594 gekoppelt sein kann, um die Klappe 594 zu öffnen (gestrichelte Darstellung der Fig. 7) und zu schließen (nicht gestrichelte Darstellung der Klappe 594 in Fig. 7). Die Funktion der Klappe ist, ein ungewolltes Fördern von Teilen in den Einlauftrichter sicher zu verhindern.

Fig. 8 zeigt eine detailliertere Vorderansicht des Einlauftrichters 52, 53 in der x-y-Ebene, wobei der Trichter einen zu einer Vertikalen symmetrisch gestalteten Aufbau aufweist. Fig. 9 und 10 zeigen Ansichten auf den Trichter 52, 53.

Oberhalb der Einlauftrichter 52 und 53 sind einer oder mehrere der Bunker 59 bis 64 angeordnet.

Die Trichter weisen vorzugsweise eine unterhalb des freien Endes des Förderbands 593 angeordnet Gleitschräge 511 auf, welche die Kleinteile in die in den eigentlichen Trichterbereich 512 leitet. Dieser Trichterbereich kann die inneren Leitbleche 54, 55 aufweisen.

Fig. 11 zeigt weiter einen Abschnitt des Förderrohrs 7 mit der Absperrklappe 9, die durch einen vorzugsweise pneumatischen Antrieb 901 und einen diesem nachgeschalteten Betätigungshebel 902 in eine Sperrstellung und eine Öffnungsstellung bringbar ist, wobei die zwei Stellungen anhand der regulär und strichpunktiert gezeichneten Hebelstellungen mit entsprechend fett gezeichneten Linien als Teile der Sperrscheibe 903 dargestellt sind, mit welcher das Rohr 7 abgesperrt oder freigegeben werden kann.

Fig. 13 zeigt eine vergrößerte Ansicht des pneumatischen Antriebs 901 in vertikaler Lage in Form eines doppeltwirkenden Pneumatikzylinders 903 mit Sensoren zur Rückmeldung des Schaltzustands mit eingefahrener bzw. ausgefahrener Kolbenstange 904 einschließlich eines elektrisch betätigbaren, sinnbildlich gezeigten 4-2-Wegeventils 905, wobei alle in den beschriebenen Baugruppen eingesetzten Pneumatikzylinder vorzugsweise dieser Bauart entsprechen. Alternativ können auch andere - insbesondere elektrische - Stellantriebe zum Einsatz kommen.

Der besondere Vorteil der den jeweiligen Luftstromerzeugern 2 jedes Aufgabezweiges nachgeordneten Absperreinheit 9, die hier als konstruktiv einfache und robuste Absperrklappe 9 ausgebildet ist, liegt darin, dass es durch ein Betätigen der Klappen möglich ist, den Kleinteile fördernden Luftstrom in dem jeweiligen Aufgabezweig schnell und einfach freizugeben oder zu verschließen. Auch kann zum weiter oben beschriebenen "Freiblasen" von Rohrleitungen durch schnelle Betätigung ein Druckstoß durch die Leitung induziert werden, der evtl. festgesetzte oder verhakte Teile lösen kann.
Wird die Klappe geschlossen, was vorteilhafterweise zumindest immer dann der Fall ist, wenn der betreffende Aufgabezweig gerade nicht genutzt wird, sinkt die Leistungsaufnahme des vorgeschalteten Luftstromerzeugers unmittelbar, ohne dass seine Drehzahl reduziert werden muss, was je nach Gerät einige Zeit kosten würde. Umgekehrt muss der Luftstromerzeuger auch nicht zeitraubend nach einer Pause hochgefahren werden, wodurch sich die Verfügbarkeit der Anlage erhöht.

Da jeder der Aufgabezweige 1a, 1b, ... eine eigene Absperreinheit aufweist, kann die Druckluft-Rohrförderanlage einfach und schnell auf jeweils einen der Aufgabezweige 1a, 1b, ... umgeschaltet werden. Es ist derart ferner auf besonders einfache Weise möglich, den fördernden Luftstrom genau auf einen vorgegebenen Zeitraum nach dem Ausfallen des letzten jeweils zu fördernden Kleinteils aus einem der Bunker 59 bis 64 zu begrenzen. Das Umschalten der zahlreichen Weichen der Anlage erfolgt ebenfalls vorteilhafterweise bei ausgeschaltetem Luftstrom.

Fig. 14 zeigt ein weiteres vorteilhaftes Detail, das bei einer erfindungsgemäßen Kleinteilförderungsanlage realisierbar ist:
Dabei wird im Bereich eines Stoßes von zwei Rohren (z.B. ein erstes Rohr 200 und ein daran anstoßendes, das erste Rohrteil verlängerndes Rohr 201) an dem in Förderrichtung (+x-Richtung) weiter entfernt angeschlossenen Rohr an dessen Einlauf eine Fase 202 ausgebildet, was die Strömung im Bereich des Rohrstoßes optimiert und ein Festsetzen oder die Beschädigung von geförderten Teilen verhindert, selbst wenn die Rohre nicht genau axial fluchten.
Dieses Detail ist an jedem Rohrstoß der erfindungsgemäßen Druckluft-Rohrförderanlage realisierbar, d.h. sowohl bei fest montierten Rohrleitungen als auch bei / in den beschriebenen Funktionskomponenten, z.B. an Weichen.

Weiterhin ist erkennbar, dass bei Rohrübergängen - insbesondere bei den beweglichen innerhalb der Weichenbaugruppen - keine besonderen Dichtungsbauteile verwendet werden. Vielmehr ergibt sich durch die erfindungsgemäße Anfasung des in Förderrichtung entfernter liegenden Rohres eine Luftströmung analog dem Venturi-Effekt, die Leckageströme gering hält, sodass Dichtungen überflüssig sind.

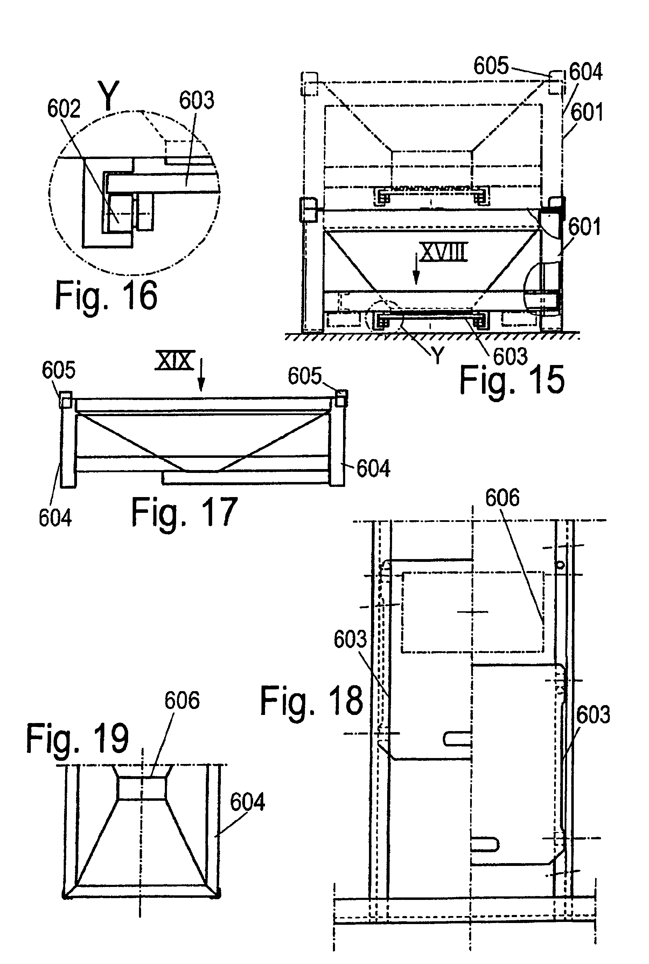

Fig. 15 zeigt eine Vorderansicht entsprechend der x-y-Ebene von zwei aufeinander gesetzten Bunker-Erweiterungen in Form mobiler Vorratsbehälter 601, die gemeinsam eine Abmessung aufweisen, die der Abmessung eines üblichen Transportbehälters zum Transport der Kleinteile entspricht.

Dazu ist das trichterartige Teil 591 der Bunker (siehe z.B. Fig. 4 f) vorzugsweise derart ausgestaltet, dass es möglich ist, oberhalb des trichterartigen Teils 591 direkt den Kleinteiltransport- und -vorratsbehälter 601 anzuordnen, der lediglich - wie transportiert - auf das trichterartige Teil 591 aufgesetzt und an der Unterseite geöffnet werden muss, damit das trichterartige Teil 591 bzw. damit der jeweilige Bunker 59 bis 64 mit den Kleinteilen befüllt wird.

Es ist denkbar, den Befüllungsstand der einzelnen Bunker mit Kleinteilen im Bunker 59 zu sensieren oder aber den Verbrauch an Kleinteilen aus dem Bunker 59 rechnerisch zu kalkulieren, um dem Nutzer anzuzeigen, wann es nötig ist, einen neuen Vorratsbehälter 601 mit Kleinteilen auf den jeweiligen Bunker 59 aufzusetzen.

Fig. 16 zeigt eine vergrößerte Ansicht einer Einzelheit Y in Fig. 15, wobei hier die Rollenlagerung 602 eines Schiebers 603 gezeigt ist, mit welchem die Bunkererweiterung - d.h. der jeweilige Transport- und Vorratsbehälter 601 - an seiner Unterseite geöffnet und verschlossen werden kann.

Vorzugsweise weisen sowohl die Bunker 59 bis 64 und / oder auch die Transport- und Vorratsbehälter 601 eine Rahmenkonstruktion 604 mit Zentrierwinkeln 605 auf, um die Transport- und Vorratsbehälter 601 an den Bunkern 59 bis 64 zu haltern und zu zentrieren bzw. auszurichten.

Fig. 15 veranschaulicht, dass auch mehrere Transport- und Vorratsbehälter 601 übereinander gestapelt werden können.

Fig. 17 zeigt schematisch eine entsprechende Seitenansicht einer der Bunker-Erweiterungen nach Art der Transport- und Vorratsbehälter 601 entsprechend der x-y-Ebene in verkleinertem Maßstab und Fig. 18 zeigt eine Draufsicht in vergrößertem Maßstab eines unteren Bereichs der Bunker-Erweiterung 601 entsprechend der Ansicht des Pfeils XVIII in Fig. 15, wobei hier Hälften des Schiebers 603 jeweils in einer die strichpunktiert angedeutete rechteckförmige Auslauföffnung 606 des Vorratsbehälters verschließenden (links) und eine die Auslauföffnung des Vorratsbehälters freigebenden Stellung (rechts) gezeigt sind. Fig. 19 zeigt schließlich eine Draufsicht auf die Bunkererweiterung in einer um 90 Grad gedrehten Teilansicht entsprechend der Richtung des Pfeils XIX in Fig. 16.

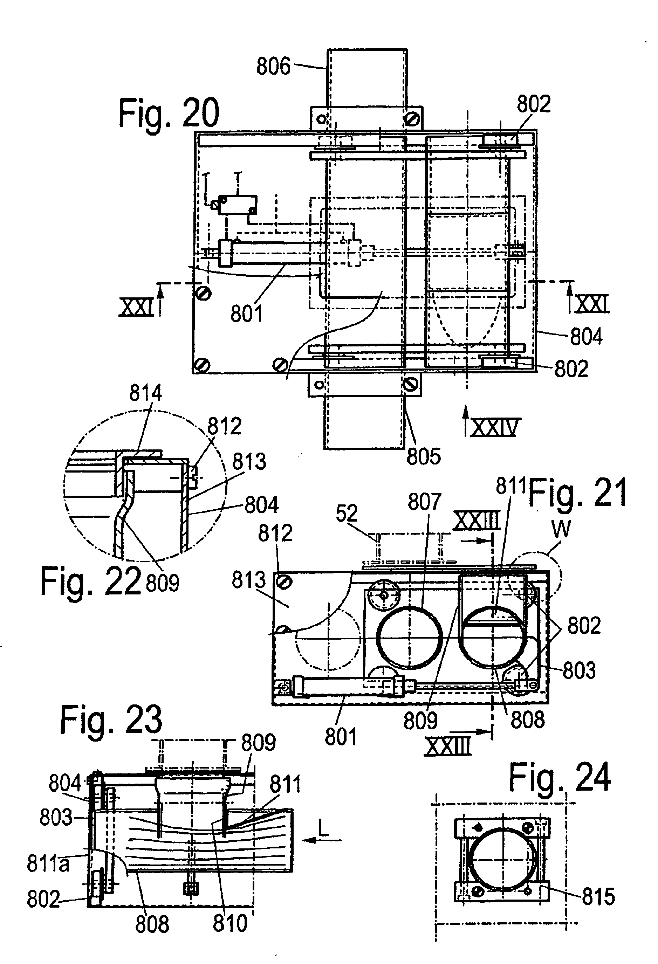

Fig. 20 zeigt eine Draufsicht auf die Einlaufeinrichtungen 8 in der x-z-Ebene in vergrößertem Maßstab.

Danach weist jede der Einlaufeinrichtungen 8 vorzugsweise einen durch einen Pneumatikzylinder 801 (vorzugsweise der bereits genannten Bauart der Fig. 2) verfahrbaren, vorzugsweise mit Rollen oder Rädern 802 versehenen Rohrwagen 803 auf.

Dieser Rohrwagen 803 ist vorzugsweise innerhalb eines umgebenden, schützenden Gehäuses 804 in zwei Endstellungen verfahr- oder verschiebbar.
Der Rohrwagen weist zwei parallel zueinander angeordnete und horizontal ausgerichtete Rohrstücke 807, 808 auf.
Diese Rohrstücke 807, 808 dienen dazu, in der einen bzw. anderen Endstellung des Rohrwagens 803 zwei stirnseitig angeordnete Rohrstutzen 805, 806 miteinander zu verbinden. Nach Fig. 1 wird derart jeweils unterhalb der Einlaufeinrichtungen 8, 12 eine durchgehende horizontale Rohrverbindung gebildet, z.B. zwischen den Rohren 7 und 10.

Das eine der beiden Rohrtücke ist als umfangsgeschlossenes durchgängiges Rohrstück 807 ausgebildet. Es verbindet in der einen Endstellung des Rohrwagens die Rohrstutzen miteinander, wobei die Einlauföffnung der Einlaufeinrichtung in Richtung zum Einlauftrichter (z.B. 52) verschlossen ist.

Das andere der beiden Rohrstücke ist als Einlaufrohrstück 808 mit einem oberen vertikalen Ansatz / Einlauf 809 ausgebildet, der unterhalb des Auslaufs des korrespondierenden Einlauftrichters (z.B.) 52 angeordnet ist.

Derart wird in der anderen Endstellung des Rohrwagens 803 die Verbindung zum Einlauftrichter 52 freigegeben, so dass Kleinteile aus dem Einlauftrichter 52 in das von dem Luftstromerzeuger 2 mit einem Druckluftstrom beaufschlagten Rohrsystem fallen können.

Um die Strömungsverhältnisse im Bereich des Einlaufs zu optimieren, ist es vorteilhaft, wenn sich der vertikale Rohransatz 809 ein Stück bis das zugehörige horizontale Rohrstück 808 hinein erstreckt, so dass eine den Luftstrom beschleunigende Verengung gebildet wird, wobei es weiter vorteilhaft ist, wenn der Innenumfang des Rohrstückes 808 in Strömungsrichtung L mit dem in das Rohrstück ragenden Endbereich 810 des Rohransatzes 809 über ein spitzwinklig zur Horizontalen ausgerichtetes Luftleitblech 811 mit dem Innendurchmesser des Rohrstückes 808 verbunden ist, um Verwirbelungen in diesem Bereich zu vermeiden und die Strömung so günstig zu führen, dass trotz offener Einlauföffnung und strömender Luft auch kleine und leichte Teile in das Rohr 808 fallen und nicht wieder herausgeblasen werden.
Durch dieses eine Luftleitschräge bildende Luftleitblech 811 im Bereich der Verengung im Bereich der Einmündung des vertikalen Rohransatzes 809 werden die Strömungsverhältnisse im Bereich der Kleinteilübergabe aus dem Bunker bzw. Einlauftrichter in das Druckluftrohrsystem deutlich gegenüber dem Stand der Technik verbessert. Insbesondere ist ein kontinuierlicher Teileeinlauf und -abtransport möglich, wodurch auch größere Mengen von Teilen in einem Durchgang an einen Zielort gefördert werden können.
Der vertikale Rohransatz 809 kann auch um einen Winkel von 10° bis 60° - günstig hierbei Winkel zwischen 30° und 50° - in Strömungsrichtung angewinkelt sein, sodass einlaufende Einzelteile in Strömungsrichtung beschleunigt in das Rohrstück 808 eintreten, weiterhin wird hierdurch Luft in das Rohr angesaugt, sodass eventuelles Herausblasen der Teile sicher vermieden wird.

Fig. 21 zeigt eine Ansicht des Einlaufsystems entsprechend dem Schnittverlauf XXI-XXI in Fig. 20 mit einem in regulärer Ansicht sichtbaren Teil einer mit Schrauben 812 befestigten Seitenplatte 813 des Gehäuses 804, wobei anhand dieser der kastenförmige Aufbau als aus Blechen zusammengesetztes Gehäuse 804 angedeutet ist. Dieser Aufbau hat sich als vorteilhaft erwiesen, um z.B. Teileblockaden in kurzer Zeit manuell beheben zu können.

Fig. 22 zeigt ergänzend eine vergrößerte Schnittansicht einer Einzelheit W in Fig. 21. Diese Einzelheit betrifft ein Flanschstück 814 am vertikalen Rohransatz 809 oder ergänzend zum vertikalen Rohransatz, der in einfacher Weise ein Anflanschen des oberen Einlauftrichters 52 erlaubt (in Fig. 22 nicht dargestellt).

Fig. 23 zeigt ergänzend eine Schnitt-Ansicht der Einlaufeinrichtung 8 entsprechend dem Schnittverlauf XXIII-XXIII in Fig. 21, wobei hier das Luftleitblech 811 zu sehen ist und wobei der dadurch eingeengte und beschleunigte Förder-Luftstrom durch dünne Linien angedeutet sind.

Fig. 24 zeigt schließlich noch eine Ansicht auf einen Teil der Einlaufeinrichtung 8 entsprechend der Richtung des Pfeils XXIV in Fig. 20, wobei hier die Befestigung des Rohrstutzens 805 oder 806 mit einer diesen umspannenden Flansch-Klemmeinrichtung 815 dargestellt ist.

Es wird an dieser Stelle nochmals darauf verwiesen, dass die Rohrstücke 807, 808 sowie die Rohrstutzen 805 und 806 wie an dem in der Fig. 14 erläuterten Beispiel eine Anfasung der Rohreinläufe aufweisen, wodurch aufwändige Dichtungsvorkehrungen insbesondere der beweglichen Rohrabschnitte entfallen können und das Hängenbleiben von Einzelteilen vermieden wird. Diese Vorkehrung wird ebenfalls an allen anderen beweglichen und unbeweglichen Rohrübergängen angewendet, ohne dass dies an den betreffenden Stellen nochmals erwähnt wird.

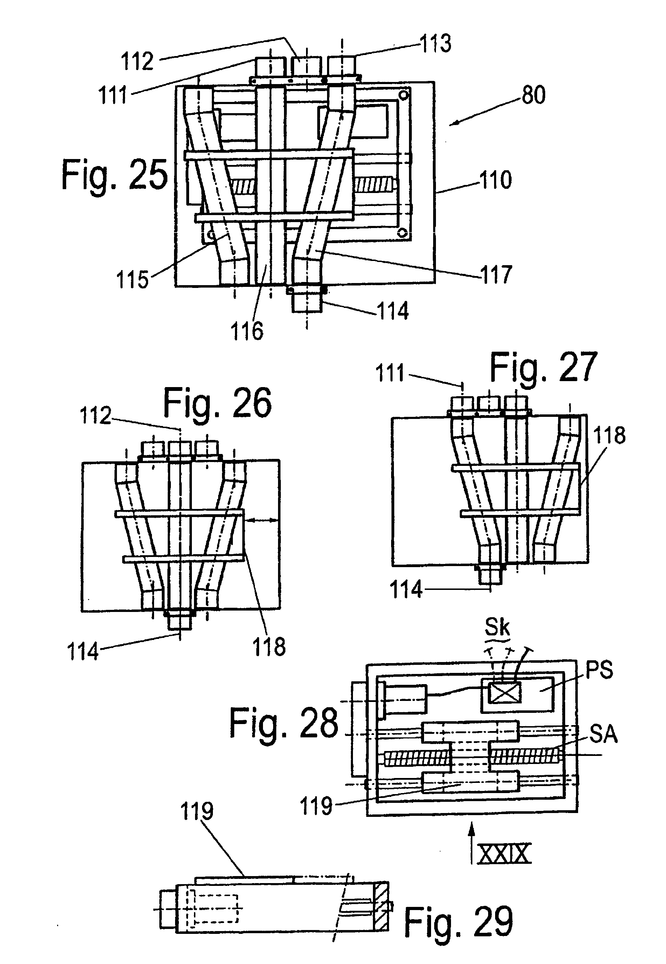

Fig. 25 zeigt eine Draufsicht entsprechend der x-z-Richtung auf eine schaltbare 4-3-Wege-Weiche 110, die z.B. als Vereinigungsweiche 80 oder als eine Veizweigungsweiche 15 nutzbar ist, wobei aber die im vorigen Abschnitt angesprochenen Anfasungen an die jeweils in Strömungsrichtung liegenden Rohreinläufe platziert werden müssen.

Die Weiche 110 dient zur wählbaren Herstellung einer Verbindung, z.B. von einem der drei (z.B. zulaufenden) Rohrstutzen 111, 112, 113 zu einem (z.B. abgehenden) Rohrstutzen 114, wobei Verbindungsrohre 115, 116, 117 gemeinsam als eine Verbindungsrohr-Einheit 118 an einem Schlitten (oder Wagen) 118 angeordnet sind und wobei hier eine erste Schaltstellung dargestellt ist. Fig. 26 zeigt die Verbindungsrohr-Einheit 118 relativ zum Gehäuse in einer zweiten Schaltstellung und Fig. 27 die Verbindungsrohr-Einheit 118 relativ zum Gehäuse in einer dritten Schaltstellung.

Fig. 28 zeigt eine die Verbindungsrohr-Einheit 118 tragende Führungs- und Antriebseinheit 119 und Fig. 29 eine Ansicht der Führungs- und Antriebseinheit in Richtung des Pfeils XXIX in Fig. 28. Sie umfasst neben einer Linear-Führungseinheit LF - z.B. einer Doppel-Gleitrohrführung wie abgebildet - eine lineare Antriebseinheit, hier dargestellt einen Spindelantrieb. Dieser wird vorzugsweise von einem elektrischen Motor MA angetrieben, der wiederum von einer Positionssteuereinheit PS angesteuert wird. Diese kann mit der zentralen Steuerung der Rohrförderanlage über Steuerkabel SK verbunden sein. Die Erfassung und Rückmeldung der Weichenposition kann wie bei der zuvor beschriebenen Drehrohrweiche mit einfachen, der jeweiligen Position zugeordneten Schaltsensoren erfolgen, die im Bereich der linearen Führungselemente oder aber direkt im Bereich der jeweils verschobenen Rohrstutzen platziert werden können.
Alternativ ist auch die Betätigung der Weiche mit pneumatischen Zylindern denkbar, wobei besonders vorteilhaft mehrere Zylinder zum Einsatz kommen, die jeweils einzeln oder in bestimmter Kombination betätigt eine bestimmte Weichenstellung generieren, sodass eine Positionserfassung der Weiche mittels Sensoren entfallen kann - die Rückmeldung der Pneumatikzylinder ist ausreichend.

Im Bereich der Abgabestationen werden vorzugsweise Abscheider 18 angeordnet, wie sie in Fig. 30 und 31 dargestellt sind. Der Abscheider weist ein Gehäuse 181 und eine vorzugsweise pneumatisch betätigte Stelleinrichtung 182 auf. Diese Stelleinrichtung ist mit einem sich horizontal erstreckenden Rohrstück 20 versehen, welches in eine die beiden Rohrstutzen 183 und 184 verbindende Stellung beweglich ist und in eine diese beiden Rohrstutzen 183 und 184 nicht verbindende Stellung, wobei an der Stelleinrichtung ein Absperrelement 185 angeordnet ist, welches den in Strömungsrichtung L auslaufenden Rohrstutzen 184 für den Austritt von Einzelteilen versperrt, wenn das Rohrstück 20 diese beiden Rohrstutzen 183, 184 nicht miteinander verbindet.

Derart ist in einer Schaltstellung eine Verbindung des Rohres 16 mit dem dazu koaxial angeordneten Rohr 20 herstellbar und in einer anderen Schaltstellung eine Verbindung des Rohres 16 mit dem sich senkrecht erstreckenden Fallrohr 19.

In der einen Stellung werden die Kleinteile durch den Abscheider 18 in dahinter angeordnete Anlagenabschnitte geleitet und in der anderen Schaltstellung werden die Kleinteile im Abscheider 18 in das Fallrohr 19 geleitet.

Das Absperrelement 185 kann optimiert für den Einsatzfall an unterschiedlichen Orten in Strömungsrichtung, in unterschiedlicher Schrägstellung und Höhe angebracht sein und je nach Beschaffenheit und Material der abzuscheidenden Teile als starres (Blech-)Teil, elastisch (aus z.B. Silikongummi) oder auch als z.B. textiler Lappen ausgeführt sein. Entscheidend ist, dass die durch den Luftstrom einfliegenden Teile ohne Beschädigung abgebremst werden, sodass sie nach unten in das Fallrohr 19 fallen, während die bis hierher transportierende Luft nach oben durch einen Schalldämpfer oder um das Absperrelement herum aus dem Rohrstück 184 in den umgebenden Raum entweichen kann.
Bei diesem Abscheidevorgang ist die Eigenschaft der Rohrförderanlage sehr vorteilhaft, dass die Geschwindigkeit der geförderten Teile zum Abscheider hin abnimmt - sie ist in der Nähe des antreibenden Luftstromerzeugers, d.h. am Einlauf, am höchsten und gegen Ende des Weges, also am Abscheider, am niedrigsten.

Fig. 30 zeigt eine Ansicht in das Innere des Abscheiders 18 entsprechend der x-y-Ebene mit einer gestrichelt gezeichneten Führungs- und Antriebseinheit und Fig. 31 eine Ansicht auf den Abscheider 18 entsprechend der Richtung des Pfeils XXXI in Fig. 30. Wie zuvor bei anderen Baugruppen beschrieben, kann auch hier sowohl ein elektrischer oder ein pneumatischer Antrieb zum Einsatz kommen, wobei wiederum Sensoren zur Erfassung der jeweiligen Position vorgesehen sind.

Fig. 32 zeigt eine Ansicht eines 3-2-Wege-Fallrohr-Verteilers 120 mit einem Gehäuse 121 mit einem Einlaufrohrstutzen 122 und zwei Auslaufrohrstutzen 123, 124. Er dient zur Unter- und Weiterverteilung der aus dem Abscheider herausfallenden Teile auf zwei verschiedene Empfängerzweige.

In dem Gehäuse 121 ist eine schwenkbare Leitblechklappe 125 angeordnet, um entweder den einen Auslaufrohrstutzen 123 oder den anderen Auslaufrohrstutzen 124 mit dem Einlaufrohrstutzen 122 zu verbinden, der wiederum vorzugsweise mit dem Fallrohr 19 des Abscheiders 18 verbunden ist. Die Verbindung zwischen dem Einlaufrohrstutzen 122 und dem Fallrohr 19 kann über einen flexiblen Schlauch oder auch direkt erfolgen, der Transport der Teile erfolgt in diesem Abschnitt der Anlage allein durch Schwerkraft.

Die Leitblechklappe 125 ist vorzugsweise mit einem Pneumatikzylinder 126 betätigbar, wobei in Fig. 32 eine Schaltstellung des im Inneren befindlichen Leitblechs und eine andere Schaltstellung durch einen Teil des Leitblechs an einem aufgebrochenen Gehäuseteil ersichtlich ist. Fig. 33 zeigt eine Draufsicht auf den 3-2-Wege-Verteiler in Richtung des Pfeils XXXIII in Fig. 32.

Die Fig. 34 bis 37 zeigen verschiedene Ansichten einer der Fallrohr-Drehweichen 21 bzw. der Drehverteiler 21, die an einem ortsfesten Gehäuse 211 jeweils um 90 Grad versetzte Bögen bzw. Rohrstutzen 22, 23, 24, 25 aufweisen. Diese Ausführungsform ist hier beispielhaft erläutert, es sind auch Anordnungen mit weniger - z.B. drei - oder mehr - z.B. fünf oder acht - Rohrstutzen-Auslässen denkbar.

Im Inneren des Verteilers 21 befindet sich ein drehbar gelagertes Zuführrohr 26, welches von einem ansteuerbaren Elektroantrieb 214 umlaufend antreibbar und derart positionierbar ist, dass vier Schaltstellungen erreichbar sind, in denen jeweils einer der Bögen 22 bis 25 mit dem Fallrohr 19 verbindbar ist. Die korrekten Schaltstellungen, in den das Fallrohr 26 mit jeweils einem der Bögen 22 bis 25 fluchtet, werden vorzugsweise durch Sensor-/Detektoreinrichtungen 212, 213 sensiert, was auf einfache Weise eine besonders exakte Ausrichtung der Bögen erlaubt.

Besonderer Vorteil dieser Positionserfassung für das Drehrohr ist, dass sie ohne aufwändigen Drehwinkelsensor auskommt. Dazu werden an jeder Sollposition geeignete Sensoren 212, 213 - vorteilhaft Kontaktschalter, Näherungsschalter oder ähnliche, robuste und zwischen zwei Zuständen schaltende Sensoren - angeordnet, sodass das Erreichen einer der Steuerung vorgebbaren Position durch ein eindeutiges Signal des entsprechenden Sensor erfasst werden kann. Die Positionierung der Sensoren kann beispielsweise an den Rohrstutzen 22 bis 25 sowie dem korrespondierenden Ende des Fallrohrs 26 geschehen (Sensoren 212, 213) oder auch am rotatorisch im Gehäuse 211 gelagerten oberen Abschnitt des Rohres 26 und am Gehäuse 211 (Sensoren 212', 213' in Fig. 36).

Fig. 38 und 39 zeigen Ansichten des Endabscheiders 47 mit einem Gehäuse 471 und mit einem Rohrstutzen 472, an welche das Rohr 20 anflanschbar ist bzw. in welches das Rohr 20 mündet und der eine Verbindung des Rohres 20 zu dem nach unten weisenden Rohrstutzen 48 und vorzugsweise die nach oben gerichtete Austrittsöffnung 49 für Luft aufweist. Unter dem Rohrstutzen kann - muß sich aber nicht - wiederum ein an dem Endabscheider 47 aufgehängter Sammelbehälter 50 befinden.

Nachfolgend sei unter Berücksichtigung der bisherigen Beschreibung nochmals Fig. 3 betrachtet.

In Fig. 3 ist ein Betriebszustand dargestellt, in welchem Kleinteile aus dem einzigen Bunker 59 des im linken Bereich der Fig. 3 mittleren Aufgabezweiges 1b durch das Rohrsystem zu der im rechten Teil der Fig. 3 unteren Abgabestation leitbar sind.

Dazu befindet sich die Absperrklappe 9b des mittleren Aufgabezweiges beispielhaft gerade in Durchlassstellung und die Einlaufeinrichtung 8b ist derart geschaltet, dass aus dem Bunker 59 durch Aktivierung des Dosierförderers 65 in den Einlauftrichter 52 ausfallende Teile in das Rohr 7b, 14b einfallen und durch die Vereinigungsweiche 80 und die nachgeschaltete Verzweigungsweiche 15 in den in Fig. 3 unteren Abscheider 18a geleitet werden, der sie z.B. durch den dargestellten 3-2-Wegverteiler 120 in den Sammelbehälter 50-1 leitet, der an einer Montagestation angeordnet ist (z.B. an einem Schraubenförderer oder dgl.).

Es wird stets zu einem vorgegebenen Zeitpunkt nur der Transport von einer Sorte an Kleinteilen aus einem der Bunker zu einer der Ausgabestationen 71 im System zugelassen.

Ein günstiges Steuerungsverfahren sorgt durch Abstimmung von Betriebsparametern - insbesondere der Luftfördermenge und -dauer - auf die Beschaffenheit der zu fördernden Teile sowie auf die Entfernung von Einlauf zu Abscheider dafür, dass einerseits die Teile sicher ankommen, andererseits aber nicht unnötig schnell im Abscheider auf das Absperrelement treffen.

Zu diesem Zweck sieht das Steuerungsverfahren vor, für jede Förderaufgabe - gekennzeichnet durch Aufgabezweig und -bunker, Teiletyp (Gewicht, Material, Abmessungen), zu durchlaufende Strecke bis zum Förderziel, Weichenanzahl und -beschaffenheit - geeignete Luftfördennengen und Förderzeiten zu parametrieren.

Weiterhin ist es vorteilhaft, nach jedem Teileförderungszyklus zunächst die Anlage mittels der Absperrklappen 9 strömungsfrei zu schalten, ohne die Luftförderanlagen herunter zu fahren, ehe die Weichenschaltungen für den jeweils nächsten Förderweg vorgenommen werden.

Anschließend folgt ein "Freiblas"-Zyklus, um sicherzustellen, dass sich keine unerwünschten Teile mehr im Rohrsystem befinden. Dazu werden alle Abscheider im jeweiligen Ziel-Abgabezweig zum abschließenden Endabscheider durchgeschaltet und auch die Einlaufeinheit des Aufgabezweiges zunächst auf "Durchgang" geschaltet, d.h. die Einlauföffnung bleibt verschlossen. Durch Öffnen der Absperrklappe 9 strömt nun Luft durch den gesamten Förderweg und darüber hinaus bis zum Endabscheider des Abgabezweiges, wobei durch den Druckstoß evtl. festgeklemmte Teile losgelöst und zusammen mit evtl. weiteren im Rohr befindlichen Restteilen im Endabscheider ausgeschieden werden.

Erst danach werden nach Schließen der Absperrklappe 9 der Einlauf 8 und der Abscheider 18 in den Transportweg geschaltet, nach Öffnen der Absperrklappe 9 wird die Klappe 594 des Dosierförderers 65 geöffnet und dieser in Betrieb gesetzt. Hierdurch werden kontinuierlich Teile in den Einlauf gefördert.

Melden die (Füllstands-) Sensoren der Vorratsbehälter oder Einfüllstutzen auf der Zielseite an die Steuerung, dass ein ausreichender Füllstand erreicht ist, so werden zunächst der Dosierförderer gestoppt und die Klappe 594 geschlossen, während der Luftstrom eine der Förderaufgabe angemessene Zeit nachläuft. Erst wenn hierdurch sichergestellt ist, dass auch das letzte dosierte Teil an seinem Ziel angekommen ist, wird die Absperrklappe 9 geschlossen und der nächste Transportzyklus beginnt.

Wird, z.B. auf Grund der der Steuerung vorliegenden Teile-Anforderungen, ein Aufgabezweig vorhersehbar länger nicht benötigt, so kann die zu diesem Zweig gehörende Luftfördereinrichtung heruntergefahren werden, um weiter Energie einzusparen. Analog kann die Luftfördereinrichtung von der Steuerung auch wieder rechtzeitig hochgefahren werden, wenn Teileanforderungen für den betreffenden Aufgabezweig vorliegen, wobei dieser Hochlauf bereits während des vorhergehenden Transportzyklus erfolgen kann, um für den nachfolgenden Zyklus bereit zu stehen. Durch die geschlossene Klappe 9 wird verhindert, dass die hochlaufende Luftfördereinrichtung einen den laufenden Teiletransport störenden Einfluss nimmt.
Weiterhin hat es sich als günstig erwiesen, dass mehrere Förderaufträge für die Aufgabezweiges gebündelt werden, um die hochgelaufene Luftfördereinrichtung optimal zu nutzen. Dazu ordnet die Steuerung den Materialanforderungen Prioritäten zu und sortiert die Transportaufgaben nach Aufgabezweigen. Das wiederum bedeutet, dass die Materialanforderungen , die von den Sensoren an den Vorratsbehältern an den Fertigungseinrichtungen an die Steuerung übermittelt werden, rechzeitig vor einem völligen Leerlaufen der jeweiligen Vorräte erfolgen und nicht unmittelbar zu einem Teiletransport führen. Vielmehr ist die verbleibende Restlaufzeit einer Einrichtung mit den verbliebenen Teilen ein in der Steuerung hinterlegter Parameter, der es erlaubt, die oben beschriebene Bündelung von Transportaufgaben für jeweils gleiche Aufgabezweige durchzuführen.

### Bezugszeichen

| | |
|---|---|
| 1 | Rohrförderanlage |
| 1a,b,c | Aufgabezweige |
| 2 | Luftstromerzeuger |
| 3 | Kreiselgebläse |
| 4 | Elektromotor |
| 5 | Leitung |
| 6 | Steuerung |
| 7 | Rohr |
| 8 | Einlauf (-einheit) |
| 9 | Absperrklappe |
| 10 | Rohr |
| 11 | Einlaufrohr |
| 12 | Einlauf(-einheit) |
| 13 | Einlaufrohr |
| 14 | Rohr |
| 15 | Verzweigungsweiche |
| 16 | Rohr (koaxial) |
| 17 | Rohr (abzweigend) |
| 18 | Abscheider |
| 19 | Fallrohr |
| 20 | Rohr (waagerecht) |
| 21 | Drehrohrventeiler |
| 22 | Bogen |
| 23 | Bogen |
| 24 | Bogen |
| 25 | Bogen |
| 26 | Zuführrohr |
| 27 | Einrichtungen |
| 28 | Einrichtungen |
| 29 | Einrichtungen |
| 30 | Einrichtungen |
| 31 | Vorratsbehälter |
| 32 | Vorratsbehälter |
| 33 | Vorratsbehälter |
| 34 | Vorratsbehälter |
| 35 | Einfüllstutzen |
| 36 | Einfüllstutzen |
| 37 | Einfüllstutzen |
| 38 | Einfüllstutzen |
| 39 | Sensor |
| 40 | Sensor |
| 41 | Sensor |
| 42 | Sensor |
| 43 | Schlauch |
| 44 | Schlauch |
| 45 | Schlauch |
| 46 | Schlauch |
| 47 | Endabscheider |
| 48 | Rohrstutzen |
| 49 | Austrittsöffnung |
| 50 | Sammelbehälter |
| 51 | Gestell |
| 52 | Einlauftrichter |
| 53 | Einlauftrichter |
| 54 | Leitblech |
| 55 | Leitblech |
| 56 | Öffnung |
| 57 | Öffnung |
| 58 | Öffnung |
| 59 | Bunker |
| 60 | Bunker |
| 61 | Bunker |
| 62 | Bunker |
| 63 | Bunker |
| 64 | Bunker |
| 65 | Dosierförderer |
| 71 | Aufgabestation |
| 72 | Abgabestation |
| 80 | Vereinigungsweiche |
| 81 | Rohr |
| 82 | Rohr |
| 90 | Verzeigungsweiche |
| 91 | Weichenvorrichtung |
| 100a,b,c | Abgabezweige |
| 110 | 4-3-Wege-Weiche |
| 111 | Rohrstutzen |
| 112 | Rohrstutzen |
| 113 | Rohrstutzen |
| 114 | Rohrstutzen |
| 115 | Verbindungsrohre |
| 116 | Verbindungsrohre |
| 117 | Verbindungsrohre |
| 118 | Schlitten |
| 119 | Führungs- und Antriebseinheit |
| 120 | 3-2-Wege-Verteiler |
| 121 | Gehäuse |
| 122 | Einlaufrohrstutzen |
| 123 | Auslaufrohrstutzen |
| 124 | Auslaufrohrstutzen |
| 125 | Leitblechklappe |
| 126 | Stellzylinder |
| 180 | Gehäuse |
| 181 | Gehäuse |
| 182 | Stelleinrichtung |
| 183 | Rohrstutzen |
| 184 | Rohrstutzen |
| 185 | Absperrelement |
| 200 | Rohr |
| 201 | Rohr |
| 202 | Fase |
| 211 | Gehäuse |
| 212 | Sensor |
| 213 | Sensor-Gegenstück |
| 214 | Antrieb |
| 471 | Gehäuse |
| 472 | Rohrstutzen |
| 473 | Prallplatte . |
| 591 | trichterförmiger Teil |
| 592 | Fenster |
| 593 | Förderband |
| 594 | Klappe |
| 595 | Stellzylinder |
| 596 | Kolbenstange |
| 511 | Gleitschräge |
| 512 | Trichterbereich |
| 513 | Leitbleche |
| 601 | Transport- und Vorratsbehälter |
| 602 | Rollenlagerung |
| 603 | Schieber |
| 604 | Rahmenkonstruktion |
| 605 | Zentrierwinkel |
| 606 | Auslauföffnung |
| 801 | Pneumatikzylinder |
| 802 | Räder |
| 803 | Rohrwagen |
| 804 | Gehäuse |
| 805 | Rohrstutzen |
| 806 | Rohrstutzen |
| 807 | Rohrstücke |
| 808 | Einlauf-Rohrstücke |
| 809 | vertikaler Rohransatz |
| 810 | Endbereich |
| 811 | Luftleitblech |
| 812 | Schraube |
| 813 | Seitenplatte |
| 814 | Flanschstück |
| 815 | Flanschklemmeinrichtung |
| 901 | Pneumatischer Antrieb |
| 902 | Betätigungshebel |
| 903 | Pneumatikzylinder |
| 904 | Kolbenstange |
| 905 | 4-2-Wegeventil |
| X.. | Boosterelemente |

## Patentansprüche

1. Pneumatische Druckluft-Rohrförderanlage zur Förderung von Montage-Kleinteilen an/für Montage- und Bearbeitungslinien zur Montage von Produkten, die zumindest folgendes aufweist:
a. wenigstens einen oder mehr Aufgabezweige (1a, 1b, 1c) zur Aufgabe der Kleinteile in die Druckluft-Rohrförderanlage,
b. mehrere Abgabestationen (72) für die Kleinteile.
**dadurch gekennzeichnet,**
**dass** die Aufgabezweige (1a, 1b, 1c) jeweils folgendes aufweisen:
i. zumindest einen Luftstromerzeuger (2),
ii. eine dem Luftstromerzeuger nachgeschaltete Absperrklappe (9), und
iii. jeweils eine der Absperrklappe (9) nachgeschaltete Aufgabestation (71) für Kleinteile,
iv. die jeweils über ein Rohr (14a, b, 14c) in wenigstens eine Vereinigungsweiche (80) mündet

2. Pneumatische Druckluft-Rohrförderanlage zur Förderung von Montage-Kleinteilen an/für Montage- und Bearbeitungslinien zur Montage von Produkten,
die zumindest folgendes aufweist:
a. wenigstens zwei oder mehr, bspw. drei, Aufgabezweige (1a, 1b, 1c) zur Aufgabe der Kleinteile in die Druckluft-Rohrförderanlage,
b. mehrere Abgabestationen (72) für die Kleinteile,
**dadurch gekennzeichnet,**
**dass** die Aufgabezweige (1a, 1b, 1c) jeweils folgendes aufweisen:
i. zumindest einen Luftstromerzeuger (2) und
ii. jeweils eine Aufgabestation (71) für Kleinteile,
iii. die jeweils über ein Rohr (14a, b, 14c) in wenigstens eine Vereinigungsweiche (80) mündet.

3. Pneumatische Druckluft-Rohrförderanlage nach Anspruch 1 oder 2, **gekennzeichnet durch** wenigstens eine oder mehrere den Abgabestationen (72) vorgeschaltete Verzweigungsweiche(n) (15, 90).

4. Pneumatische Druckluft-Rohrförderanlage nach einem der vorstehenden Ansprüche, **dadurch gekennzeichnet, dass** jede der Aufgabestationen der Aufgabezweige (1a, 1b, 1c), wenigstens einen oder mehrere Bunker (59) für die Kleinteile und wenigstens eine oder mehrere Einlaufeinrichtungen (8) aufweist und dass unterhalb von einem oder mehreren der Bunker (59 - 64) jeweils ein Einlauftrichter (52, 53) angeordnet ist, der in jeweils eine der Einlaufeinrichtungen (8) mündet.

5. Pneumatische Druckluft-Rohrförderanlage nach einem der vorstehenden Ansprüche, **dadurch gekennzeichnet, dass** an den einen oder an jeden der mehreren Luftstromerzeuger (2) jedes Aufgabezweiges (1a, 1b, 1c) jeweils ein Rohr (7) angeschlossen ist, in das jeweils eine oder mehrere der Einlaufeinrichtungen (8) geschaltet sind, wobei das Rohr (7) zwischen dem jeweiligen Luftstromerzeuger (2) und der jeweils ersten Einlaufeinrichtung (8) jedes Aufgabezweiges (1a, 1b, 1c) mit einer ansteuerbaren Absperrklappe (9) versehen ist.

6. Pneumatische Druckluft-Rohrförderanlage nach Anspruch 4 oder 5, **dadurch gekennzeichnet, dass** jeder der Bunker (59 bis 64) einen Dosierförderer (65-70) aufweist.

7. Pneumatische Druckluft-Rohrförderanlage nach einem der vorstehenden Ansprüche 4-6, **dadurch gekennzeichnet, dass** die Bunker (59) jeweils einen trichterförmigen Teil (591) aufweisen, unter dem sich die Oberseite eines Förderbandes (593) befindet, dem eine vorzugsweise pneumatisch verschwenkbare Klappe (594) zugeordnet ist und dass das Förderband (593) und die Klappe (594) jeweils einen der Dosierförderer (65 bis 70) der Bunker (59 bis 64) ausbildet.

8. Pneumatische Druckluft-Rohrförderanlage nach einem der Ansprüche 4-7, **dadurch gekennzeichnet, dass** die Bunker (59- 64) derart ausgestaltet sind, dass auf sie direkt Bunker-Erweiterungen in Form mobiler Vorrats- und Transportbehälter für die Kleinteile aufsetzbar sind.

9. Pneumatische Druckluft-Rohrförderanlage nach einem der Ansprüche 4-7, **dadurch gekennzeichnet, dass** die Bunker (59 bis 64) und die Transport- und Vorratsbehälter (601) korrespondierende Rahmenkonstruktionen (604) mit Zentrierwinkeln (605) aufweisen, um die Transport- und Vorratsbehälter (601) an den Bunkern (59 bis 64) zu haltern und zu zentrieren.

10. Pneumatische Druckluft-Rohrförderanlage nach einem der vorstehenden Ansprüche, **dadurch gekennzeichnet, dass** wenigstens ein Abscheider (18) vorgesehen ist, dem ein Fallrohr-Drehverteiler (21) nachgeschaltet ist.

11. Pneumatische Druckluft-Rohrförderanlage nach Anspruch 10, **dadurch gekennzeichnet, dass** der Fallrohr-Drehverteiler (21) an einem ortsfesten Gehäuse (211) jeweils umfangsversetzte Bögen bzw. Rohrstutzen (22, 23, 24, 25) aufweist und dass im Innern des Gehäuses (211) ein drehbar gelagertes Zuführrohr (26) angeordnet ist, welches von einem ansteuerbaren Antrieb (214) umlaufend antreibbar und derart positionierbar ist, dass verschiedene Schaltstellungen erreichbar sind, in denen jeweils einer der Bögen (22 bis 25) mit dem Fallrohr (19) fluchtet.

12. Pneumatische Druckluft-Rohrförderanlage nach Anspruch 11, **dadurch gekennzeichnet, dass** die Schaltstellungen, in den das Zuführrohr (26) mit jeweils einem der Bögen (22 bis 25) fluchtet, durch Sensor-/Detektoreinrichtungen (212, 213) sensiert und angesteuert werden und dass vorzugsweise je Schaltstellung ein Sensor vorgesehen ist, der wie ein Schalter arbeitet und beim Erreichen der jeweiligen Zielposition ein Signal ausgibt.

13. Pneumatische Druckluft-Rohrförderanlage nach einem der vorstehenden Ansprüche, **dadurch gekennzeichnet, dass** sie eine Steuerungsvorrichtung (6) aufweist, die mit einem Steuerungsprogramm zur Steuerung der Druckluft-Rohrförderanlage versehen ist.

14. Pneumatische Druckluft-Rohrförderanlage nach Anspruch 13, **dadurch gekennzeichnet, dass** sie wenigstens eine Boostereinrichtung zur Luftstrom-Neueinspeisung aufweist.

15. Pneumatische Druckluft-Rohrförderanlage nach Anspruch 10-14, **dadurch gekennzeichnet, dass** unterhalb von den Abscheidern (18) und/oder den Drehweichen (21) jeweils wenigstens ein Zwischenspeicher für die Kleinteile angeordnet ist.

16. Pneumatische Druckluft-Rohrförderanlage nach einem der vorstehenden Ansprüche, **dadurch gekennzeichnet, dass** sie in jeder Abgabestation (70) einen Endabscheider (47) aufweist und dass vorzugsweise jeder Endabscheider (47) einen Luftauslass und einen Fehlteilesammler aufweist.

17. Verfahren zum Ansteuern einer pneumatischen Druckluft-Rohrförderanlage nach einem der vorstehenden Ansprüche 4-16, **dadurch gekennzeichnet, dass** stets nur einer der Bunker (59 - 64) der gesamten Aufgabezweige (1a, 1b, 1c) mit stets nur einem der Abscheider (18) oder Endabscheider (47) verbindbar ist, so dass sich stets nur eine Sorte von Kleinteilen im mit Druckluft beaufschlagbaren (Rohrleitungs- )bereich der Druckluft-Rohrförderanlage befindet.

18. Verfahren nach Anspruch 17, **dadurch gekennzeichnet, dass** die Zeitdauer des Luftstrombeaufschlagens der Druckluft-Rohrförderanlage zum Transport jeweils eines bestimmten Kleinteils derart bemessen ist, dass sich keine Kleinteile mehr im Druckluft beaufschlagbaren (Rohrleitungs-)bereich der Druckluft-Rohrförderanlage befinden, bevor eine andere Verbindung zwischen einem anderen Bunker und einer anderen Abgabestation aktiviert wird.

19. Verfahren nach Anspruch 17 oder 18, **dadurch gekennzeichnet, dass** vor jedem Fördern einer neuen Sorte von Kleinteilen ein Entleerungs-Luftstoß in die Druckluft-Rohrförderanlage eingeleitet wird.

20. Verfahren nach einem der Ansprüche 17 bis 19, **dadurch gekennzeichnet, dass** die Zeitdauer des Luftstrombeaufschlagens der Druckluft-Rohrförderanlage zum Transport jeweils einer bestimmten Sorte von Kleinteilen um einen vorgebbaren Mindestzeitraum länger ist als die sich aus der Entfernung und der Kleinteilgeschwindigkeit im Luftstrom errechnende Transportzeit zum jeweiligen Abscheider (18).

21. Verfahren nach einem der Ansprüche 17 bis 20, **dadurch gekennzeichnet, dass** die Stärke des Luftstromes der Luftstromerzeuger vorzugsweise jeweils entsprechend zum Gewicht (und ggf. Anhängigkeit von deren Form) der zu fördernden Teile gesteuert wird.

22. Verfahren nach einem der Ansprüche 17 bis 21, **dadurch gekennzeichnet, dass** das Steuerungsverfahren dazu ausgelegt ist, für jede Förderaufgabe - bestimmt durch Aufgabezweig und -bunker, Teiletyp, zu durchlaufende Strecke bis zum Förderziel, Weichenanzahl und -beschaffenheit - geeignete Luftfördermengen und Förderzeiten zu parametrieren.

23. Verfahren nach einem der Ansprüche 17 bis 22, **dadurch gekennzeichnet, dass** nach jedem Teileförderungszyklus zunächst die Anlage mittels der Absperrklappen (9) strömungsfrei geschaltet werden, ohne die Luftförderanlagen herunter zu fahren, ehe die Weichenschaltungen für den jeweils nächsten Förderweg vorgenommen werden.

24. Verfahren nach einem der Ansprüche 17 bis 23, **dadurch gekennzeichnet, dass** mit einem "Freiblas"-Zyklus sichergestellt wird, dass sich keine unerwünschten Teile mehr im Rohrsystem befinden, wozu alle Abscheider im jeweiligen Ziel- Abgabezweig zum abschließenden Endabscheider durchgeschaltet und auch die Einlaufeinheit des Aufgabezweiges zunächst auf "Durchgang" geschaltet wird, woraufhin durch Öffnen der Absperrklappe (9) Luft durch den gesamten Förderweg und darüber hinaus bis zum Endabscheider des Abgabezweiges strömt, wobei durch den Druckstoß evtl. festgeklemmte Teile losgelöst werden und im Endabscheider ausgeschieden werden.

25. Verfahren nach Anspruch 24, **dadurch gekennzeichnet, dass** nach einem Schließen der Absperrklappe (9) der Einlauf (8) und der Abscheider (18) geschaltet werden und dass nach einem Öffnen der Absperrklappe (9) die Klappe (594) des Dosierförderers (65) geöffnet und dieser in Betrieb gesetzt wird, wodurch kontinuierlich Teile in den Einlauf gefördert werden.

## Claims

1. A pneumatic compressed-air tube transport system for transporting small assembly parts to/for assembly and processing lines for assembly of products, comprising at least the following:
a. at least one or more drop-off branches (1a, 1b, 1c) for dropping off the small parts into the compressed-air tube transport system,
b. a plurality of delivery stations (72) for the small parts,
**characterized in**
**that** the drop-off branches (1a, 1b, 1c) each comprise the following:
i. at least one air flow generator (2),
ii. a butterfly valve (9) downstream of the air flow generator and
iii. respectively one drop-off station (71) for small parts downstream of the butterfly valve (9) and
iv. which each lead through a tube (14a, b, 14c) into at least one joining switch (80).

2. A pneumatic compressed-air tube transport system for transporting small assembly parts to/for assembly and processing lines for assembly of products, comprising at least the following:
a. at least two or more, for example three, drop-off branches (1a, 1b, 1c) for dropping off the small parts into the compressed-air tube transport system,
b. a plurality of delivery stations (72) for the small parts,
**characterized in**
**that** the drop-off branches (1a, 1b, 1c) each comprise the following:
i. at least one air flow generator (2) and
ii. respectively one drop-off station (71) for small parts and
iii. which each lead through a tube (14a, b, 14c) into at least one joining switch (80).

3. A pneumatic compressed-air tube transport system according to claim 1 or 2, **characterised by** at least one or more branching switch(es) (15, 90) upstream of the delivery stations (72).

4. The pneumatic compressed-air tube transport system according to any one of the preceding claims, **characterised in that** each of the drop-off stations of the drop-off branches (1a, 1b, 1c) comprises at least one or more bunkers (59) for the small parts and at least one or more inlet devices (8) and that respectively one inlet hopper (52, 53) which opens into respectively one of the inlet devices (8) is located below one or more of the bunkers (59-64).

5. The pneumatic compressed-air tube transport system according to any one of the preceding claims, **characterised in that** respectively one tube (7) is connected to the one or to each of the plurality of air flow generators (2) of each drop-off branch (1a, 1b, 1c), into which respectively one or more of the inlet devices (8) is switched, wherein the tube (7) between the respective air flow generator (2) and the respective first inlet device (8) of each drop-off branch (1a, 1b, 1c) is provided with a controllable butterfly valve (9).

6. The pneumatic compressed-air tube transport system according to claim 4 or 5, **characterised in that** each of the bunkers (59 to 64) has a metering conveyor (65-70).

7. The pneumatic compressed-air tube transport system according to any one of the preceding claims 4-6, **characterised in that** the bunkers (59) each have a funnel-shaped part (591) below which the upper side of a conveyor belt (593) is located, which is assigned a preferably pneumatically pivotable flap (594) and that the conveyor belt (593) and the flap (594) each form one of the metering conveyors (65 to 70) of the bunkers (59 to 64).

8. The pneumatic compressed-air tube transport system according to any one of claims 4-7, **characterised in that** the bunkers (59-64) are configured in such a manner that bunker extensions in the form of mobile storage and transport containers for small parts can be placed directly thereon.

9. The pneumatic compressed-air tube transport system according to any one claims 4-7, **characterised in that** the bunkers (59 to 64) and the transport and storage containers (601) have corresponding frame constructions (604) with centring angles (605) in order to hold and to centre the transport and storage containers (601) on the bunkers (59 to 64).

10. The pneumatic compressed-air tube transport system according to any one of the preceding claims, **characterised in that** at least one separator (18) is provided, which is located downstream of the drop-tube rotary distributor (21).

11. The pneumatic compressed-air tube transport system according to claim 10, **characterised in that** the drop-tube rotary distributor (21) comprises circumferentially offset bends or tube connectors (22, 23, 24, 25) on a fixed housing (211) and that a rotatably mounted feed tube (26) is located inside the housing (211), which can be driven circumferentially by a controllable drive (214) and can be positioned in such a manner that the various switching positions can be reached in which respectively one of the bends (22 to 25) is in alignment with the drop tube (19).

12. The pneumatic compressed-air tube transport system according to claim 11, **characterised in that** the switching positions in which the drop tube (26) is in alignment with respectively one of the bends (22 to 25) are sensed and controlled by sensor/detector devices (212, 213), and that one sensor is provided per switching position which operates like a switch and delivers a signal on reaching the respective target position.

13. The pneumatic compressed-air tube transport system according to any one of the preceding claims, **characterised in that** this comprises a control device (6) which is provided with a control program for controlling the compressed-air tube transport system.

14. The pneumatic compressed-air tube transport system according to claim 13, **characterised in that** this comprises at least one booster device for resupplying the air flow.

15. The pneumatic compressed-air tube transport system according to claim 10-14, **characterised in that** respectively at least one intermediate storage device is located below the separators (18) and/or the rotary switches (21).

16. The pneumatic compressed-air tube transport system according to any one of the preceding claims, **characterised in that** this has an end separator (47) in each delivery station (70) and that each end separator (47) preferably has an air outlet and a faulty part collector.

17. A method for controlling a pneumatic compressed-air tube transport system according to any one of the preceding claims 4-16, **characterised in that** at all times only one of the bunkers (59-64) of the entire drop-off branches (1a, 1b, 1c) can at all times only be connected to one of the separators (18) or end separators (47) so that at all times only one type of small parts is located in the (tubing) area of the compressed-air tube transport system which can be acted upon with compressed air.

18. The method according to claim 17, **characterised in that** the time of action of the air flow of the compressed-air tube transport system for transporting respectively one specific small part is determined in such a manner that no more small parts are located in the (tubing) area of the compressed-air tube transport system which can be acted upon with compressed air before another connection is activated between another bunker and another delivery station.

19. The method according to claim 17 or 18, **characterised in that** before every conveyance of a new type of small parts, an emptying air blast is introduced into the compressed-air tube transport system.

20. The method according to one of claims 17 to 19, **characterised in that** the time of action of the air flow of the compressed-air tube transport system for transporting respectively one specific type of small parts is longer by a pre-definable minimum time than the transport time to the respective separator (18) calculated from the distance and the small part velocity in the air flow.

21. The method according to any one of claims 17 to 20, **characterised in that** the intensity of the air flow of the air flow generator is in each case controlled according to the weight (and possibly depending on the shape thereof) of the parts to be transported.

22. The method according to any one of claims 17 to 21, **characterised in that** the control method is designed to parameterize suitable conveying air flows and conveying times for each conveying task, determined by drop-off branch and bunker, type of parts, distance to be covered to transport destination, number and condition of switches.

23. The method according to any one of claims 17 to 22, **characterised in that** after each parts conveying cycle the system is initially switched flow-free by means of the butterfly valves (9) without shutting down the air transport systems before the switch circuits for the respectively next conveying path have been made.

24. The method according to any one of claims 17 to 23, **characterised in that** a "blasting" cycle ensures that no undesired parts are located in the tube system for which all the separators are switched through to the final end separator in the respective destination delivery branch and the inlet unit of the drop-off branch is initially switched to "passage" whereupon by opening the butterfly valve (9) air flows through the entire conveying path and furthermore as far as the end separator of the delivery branch wherein any stuck parts are released by the pressure surge and discharged in the end separator.

25. The method according to claim 24, **characterised in that** after closing the butterfly valve (9) the inlet (8) and the separator (18) are switched and that after opening the butterfly valve (9) the flap (594) of the metering conveyor (65) is opened and this is set in operation, whereby parts are conveyed continuously into the inlet.

## Revendications

1. Agencement de transport tubulaire pneumatique à air comprimé pour le transport de petites pièces de montage sur et pour des lignes de montage et d'usinage pour le montage de produits, qui présente au moins les éléments suivants :
a. au moins une ou plusieurs branches d'alimentation (1a, 1b, 1c) pour l'alimentation des petites pièces dans l'agencement de transport tubulaire pneumatique à air comprimé,
b. plusieurs postes de remise (72) pour les petites pièces,
**caractérisé en ce que** la branche d'alimentation (1a, 1b, 1c) présente respectivement les éléments suivants :
i. au moins un générateur de courant d'air (2),
ii. un clapet d'arrêt (9) monté en aval du générateur de courant d'air, et
iii. respectivement un poste d'alimentation (71) monté en aval du clapet d'arrêt (9) pour des petites pièces,
iv. qui débouche respectivement par le biais d'un tube (14a, b, 14c) dans au moins un aiguillage d'assemblage (80).

2. Agencement de transport tubulaire pneumatique à air comprimé pour le transport de petites pièces de montage sur et pour des lignes de montage et d'usinage pour le montage de produits, qui présente au moins les éléments suivants :
a. au moins deux ou plus, par exemple trois, branches d'alimentation (1a, 1b, 1c) pour l'alimentation des petites pièces dans l'agencement de transport tubulaire pneumatique à air comprimé,
b. plusieurs postes de remise (72) pour les petites pièces,
**caractérisé en ce que** les branches d'alimentation (1a, 1b, 1c) présentent respectivement les éléments suivants :
i. au moins un générateur de courant d'air (2) et
ii. respectivement un poste d'alimentation (71) pour des petites pièces,
iii. qui débouche respectivement par le biais d'un tube (14a, b, 14c) dans au moins un aiguillage d'assemblage (80).

3. Agencement de transport tubulaire pneumatique à air comprimé selon la revendication 1 ou 2, **caractérisé par** au moins un ou plusieurs aiguillages de dérivation (15, 90) monté en amont des postes de remise (72).

4. Agencement de transport tubulaire pneumatique à air comprimé selon l'une quelconque des revendications précédentes, **caractérisé en ce que** chacun des postes d'alimentation de la branche d'alimentation (1a, 1b, 1c) présente au moins un ou plusieurs réservoirs (59) pour les petites pièces et au moins un ou plusieurs dispositifs d'entrée (8) et **en ce que** respectivement une trémie d'entrée (52, 53) est disposée sous un ou plusieurs des réservoirs (59 à 64), laquelle débouche respectivement dans l'un des dispositifs d'entrée (8).

5. Agencement de transport tubulaire pneumatique à air comprimé selon l'une quelconque des revendications précédentes, **caractérisé en ce que** respectivement un tube (7) est raccordé à l'un ou à chacun des plusieurs générateurs de courant d'air (2) de chaque branche d'alimentation (1a, 1b, 1c), dans lequel respectivement un ou plusieurs des dispositifs d'entrée (8) sont montés, le tube (7) étant pourvu d'un clapet d'arrêt (9) pouvant être commandé entre le générateur de courant d'air (2) respectif et le premier dispositif d'entrée respectif (8) de chaque branche d'alimentation (1a, 1 b, 1 c).

6. Agencement de transport tubulaire pneumatique à air comprimé selon la revendication 4 ou 5, **caractérisé en ce que** chacun des réservoirs (59 à 64) présente un transporteur doseur (65 à 70).

7. Agencement de transport tubulaire pneumatique à air comprimé selon l'une quelconque des revendications précédentes 4 à 6, **caractérisé en ce que** les réservoirs (59) présentent respectivement une partie en forme de trémie (591), sous laquelle se trouve le côté supérieur d'une bande transporteuse (593), à laquelle un clapet (594) pivotant de préférence par voie pneumatique est associé et **en ce que** la bande transporteuse (593) et le clapet (594) réalisent respectivement l'un des transporteurs doseurs (65 à 70) des réservoirs (59 à 64).

8. Agencement de transport tubulaire pneumatique à air comprimé selon l'une quelconque des revendications précédentes 4 à 7, **caractérisé en ce que** les réservoirs (59 à 64) sont configurés de sorte que des extensions de réservoir sous la forme de récipients de stockage et de transport mobiles pour les petites pièces puissent être placées directement sur ceux-ci.

9. Agencement de transport tubulaire pneumatique à air comprimé selon l'une quelconque des revendications précédentes 4 à 7, **caractérisé en ce que** les réservoirs (59 à 64) et les récipients de transport et de stockage (601) présentent des constructions de cadre (604) correspondantes avec des angles de centrage (605) afin de maintenir et centrer les récipients de transport et de stockage (601) sur les réservoirs (59 à 64).

10. Agencement de transport tubulaire pneumatique à air comprimé selon l'une quelconque des revendications précédentes, **caractérisé en ce qu'**au moins un séparateur (18) est prévu, en aval duquel est monté un distributeur tournant à tuyau de descente (21).

11. Agencement de transport tubulaire pneumatique à air comprimé selon la revendication 10, **caractérisé en ce que** le distributeur tournant à tuyau de descente (21) présente sur un boîtier fixe (211) respectivement des coudes ou tubulures à la périphérie décalée (22, 23, 24, 25) et **en ce qu'**à l'intérieur du boîtier (211) est disposé un tube d'amenée (26) logé de manière rotative qui peut être entraîné en rotation par un entraînement pouvant être commandé (214) et positionné de telle manière que différentes positions de commutation puissent être atteintes, dans lesquelles respectivement l'un des coudes (22 à 25) s'aligne sur le tuyau de descente (19).

12. Agencement de transport tubulaire pneumatique à air comprimé selon la revendication 11, **caractérisé en ce que** les positions de commutation, dans lesquelles le tube d'amenée (26) s'aligne sur respectivement l'un des coudes (22 à 25), sont détectées et commandées par des dispositifs de capteur/détecteur (212, 213) et **en ce qu'**un capteur est de préférence prévu par position de commutation, lequel travaille comme un commutateur et émet un signal lors de l'atteinte de la position cible respective.

13. Agencement de transport tubulaire pneumatique à air comprimé selon l'une quelconque des revendications précédentes, **caractérisé en ce qu'**il présente un dispositif de commande (6) qui est pourvu d'un programme de commande pour la commande de l'agencement de transport tubulaire pneumatique à air comprimé.

14. Agencement de transport tubulaire pneumatique à air comprimé selon la revendication 13, **caractérisé en ce qu'**il présente au moins un dispositif de suralimentation pour la réalimentation de courant d'air.

15. Agencement de transport tubulaire pneumatique à air comprimé selon les revendications 10 à 14, **caractérisé en ce que** respectivement au moins un réservoir intermédiaire pour les petites pièces est disposé sous les séparateurs (18) et/ou les aiguillages tournants (21).

16. Agencement de transport tubulaire pneumatique à air comprimé selon l'une quelconque des revendications précédentes, **caractérisé en ce qu'**il présente dans chaque poste de remise (70) un séparateur final (47) et **en ce que** chaque séparateur final (47) présente de préférence une sortie d'air et un collecteur de pièces défectueuses.

17. Procédé de commande d'un agencement de transport tubulaire pneumatique à air comprimé selon l'une quelconque des revendications précédentes 4 à 16, **caractérisé en ce que** toujours un seul des réservoirs (59 à 64) de la branche d'alimentation entière (1a, 1b, 1c) peut être relié à toujours un seul des séparateurs (18) ou séparateur final (47) de sorte que toujours une seule sorte de petites pièces se trouve dans la zone (de conduite) pouvant être alimentée en air comprimé de l'agencement de transport tubulaire à air comprimé.

18. Procédé selon la revendication 17, **caractérisé en ce que** la durée de l'alimentation en air comprimé de l'agencement de transport tubulaire à air comprimé pour le transport respectivement d'une petite pièce déterminée est mesurée de telle manière qu'aucune petite pièce ne se trouve plus dans la zone (de conduite) pouvant être alimentée en air comprimé de l'agencement de transport tubulaire à air comprimé avant qu'une autre liaison entre un autre réservoir et un autre poste de remise ne soit activée.

19. Procédé selon la revendication 17 ou 18, **caractérisé en ce qu'**avant chaque transport d'une nouvelle sorte de petites pièces, un coup de souffle de vidage est introduit dans l'agencement de transport tubulaire à air comprimé.

20. Procédé selon l'une quelconque des revendications 17 à 19, **caractérisé en ce que** la durée de l'alimentation en air comprimé de l'agencement de transport tubulaire à air comprimé pour le transport respectivement d'une sorte déterminée de petites pièces est plus longue d'une période minimale prescriptible que la durée de transport calculée à partir de l'éloignement et de la vitesse des petites pièces dans le courant d'air vers le séparateur respectif (18).

21. Procédé selon l'une quelconque des revendications 17 à 20, **caractérisé en ce que** la force du courant d'air des générateurs de courant d'air est commandée de préférence respectivement selon le poids (et éventuellement selon la forme) des pièces à transporter.

22. Procédé selon l'une quelconque des revendications 17 à 21, **caractérisé en ce que** le procédé de commande est conçu afin de paramétrer des quantités de transport d'air et durées de transport convenant à chaque mission de transport, déterminée par la branche et le réservoir d'alimentation, le type de pièce, la distance à parcourir jusqu'à la cible de transport, le nombre et la nature des aiguillages.

23. Procédé selon l'une quelconque des revendications 17 à 22, **caractérisé en ce que** l'agencement est tout d'abord monté sans courant à l'aide des clapets d'arrêt (9) après chaque cycle de transport de pièces sans abaisser les agencements de transport d'air avant que les circuits d'aiguillage ne soient utilisés pour la course de transport suivante respective.

24. Procédé selon l'une quelconque des revendications 17 à 23, **caractérisé en ce qu'**un cycle « de soufflage libre » permet d'assurer qu'aucune pièce non souhaitée ne se trouve plus dans le système tubulaire, pour quoi tous les séparateurs sont mis en communication dans la branche de remise cible respective vers le séparateur final et l'unité d'entrée de la branche d'alimentation est aussi tout d'abord commutée sur « passage », suite à quoi de l'air passe par l'ouverture du clapet d'arrêt (9) par la course de transport entière et en outre jusqu'au séparateur final de la branche de remise, des pièces éventuellement coincées étant détachées par le coup de bélier et séparées dans le séparateur final.

25. Procédé selon la revendication 24, **caractérisé en ce que** l'entrée (8) et le séparateur (18) sont commutés après une fermeture du clapet d'arrêt (9) et **en ce qu'**après une ouverture du clapet d'arrêt (9), le clapet (594) du transporteur doseur (65) est ouvert et celui-ci est mis en service, ce qui entraîne le transport continu des pièces dans l'entrée.
